# EUROPEAN PATENT SPECIFICATION

(11) **EP 4 463 501 B1**
(45) Date of publication and mention of the grant of the patent: **24.12.2025**
(21) Application number: 23700507.9
(22) Date of filing: 10.01.2023
(51) Int. Cl.: C08G 64/06, C08G 64/30

(54) **PROCESS FOR PREPARING A POLYCARBONATE BY FRIEDEL-CRAFTS ALKYLATION**
VERFAHREN ZUR HERSTELLUNG EINES POLYCARBONATS DURCH FRIEDEL-CRAFTS-ALKYLIERUNG
PROCÉDÉ DE PRÉPARATION D'UN POLYCARBONATE PAR ALKYLATION DE FRIEDEL-CRAFTS

(30) Priority: 14.01.2022 EP 22151619
(43) Date of publication of application: 20.11.2024
(73) Proprietor: Covestro Deutschland AG, 51373 Leverkusen (DE)
(72) Inventor: GARSKA, Bernd, 51103 Köln (DE); HEIJL, Jan, 2040 Antwerpen (BE); MAES, Bert, 2610 Wilrijk (BE); MAMPUYS, Pieter, 2240 Zandhoven (BE)
(74) Representative: Levpat
(86) International application number: PCT/EP2023/050379
(87) International publication number: WO 2023/135105

(56) References cited:
- JP-A- H06 298 923
- US-B2- 8 962 788
- HIRAO G ET AL: "Chemical Abstract summary of JP06298923", 25 October 1994 (1994-10-25), pages 1 - 21, XP055931885, Retrieved from the Internet <URL:http://citenpl.internal.epo.org/wf/web/citenpl/citenpl.html> [retrieved on 20220615]

## Description

The present invention relates to a process for preparing a polycarbonate using electrophilic aromatic substitution, comprising a reaction of a diaryl carbonate with a structure of formula (I) and a dichloromethylbenzene with a structure of formula (II) as described below. Furthermore, the invention relates to a polycarbonate comprising a repeating unit with a structure of formula (III) as described below.

Polycarbonates, in particular aromatic polycarbonates, are known to exhibit improved mechanical and optical properties, heat resistance and weatherability. Due to such a property profile, polycarbonates are employed in various indoor and outdoor applications. Typically, polycarbonates are prepared by the generally known interphase phosgenation process or *via* melt transesterification. Both processes employ bisphenols, e.g. bisphenol A ((2,2-bis(4-hydroxyphenol)propane), reacting either with phosgene or a diaryl carbonate (cf. for example US8,962,788B2) to result in a polymeric structure. This means that typically the polymeric backbone is defined by the structure of the diol and the carbonate group, being introduced into said backbone by the polymerization reaction itself. Employing aromatic diols such as bisphenol A, bisphenol B, bisphenol C, bisphenol E, bisphenol F, bisphenol G, bisphenol M, bisphenol P, bisphenol TMC and bisphenol Z, backbones may be formed that comprise the carbonate group at the aromatic ring. Said carbonate group is located *para* to the at least one other substituent at the aromatic ring which, depending on the structure of the diol, connects the carbonate-aromatic ring-group to the next carbonate group in the polycarbonate backbone.

However, there is a constant need for improving the properties of classical aromatic (co)polycarbonates including the use of bio-based aromatic diols. Thus, developing alternative synthesis routes besides the classical interphase phosgenation or melt transesterification processes - enabling to connect aromatic moieties with carbonate groups, raises scientific and economic interests.

Therefore, it is an object of the present invention to provide an alternative process for preparing a polycarbonate. Preferably, it is an object of the present invention to provide a process for preparing a polycarbonate with a repeating unit comprising two aromatic moieties being linked with each other and - within the repeating unit - one of the aromatic moieties being substituted with a carbonate group. More preferably, it is an object of the present invention to provide a process for preparing a polycarbonate with a repeating unit comprising two aromatic moieties being linked with each other and - within the repeating unit - one of the aromatic moieties being substituted with a carbonate group, wherein the carbonate group is introduced to the repeating unit without the need of separately forming the carbonate group. Still preferably, it is an object of the present invention to provide a process for preparing a polycarbonate, including a reaction for the formation of the repeating unit, comprising linking of two aromatic moieties with each other. Such a reaction mandatorily requires that the aromatic moieties comprise carbonate substituents in order to obtain a polycarbonate comprising carbonate groups. Therefore, it is also preferably an object of the present invention to provide a process for preparing a polycarbonate with a repeating unit that comprises two aromatic moieties being linked with each other, and - within the repeating unit - one of the aromatic moieties being substituted with a carbonate group, wherein said carbonate group is not affected by the process as such. In this context the term "affected" preferably means that the carbonate is not degraded.

Besides the above, it is an object of the present invention to provide a polycarbonate, that may be prepared by the process according to the invention. Also, it is an object of the invention to provide a polycarbonate comprising novel chemical and physical properties when compared to polycarbonates known from the state of the art.

A well-known organic reaction is the so-called "Friedel-Crafts alkylation" which is used to attach substituents to an aromatic ring. Generally, the procedure of a "Friedel-Crafts alkylation" involves the alkylation of an aromatic ring with an alkyl halide using a strong Lewis acid, such as aluminum chloride or ferric chloride, the latter acting as catalysts. It is thus a further objective of the present invention to investigate whether the Friedel-Crafts alkylation as such or in an amended way can be used to obtain a polycarbonate.

In literature, "Friedel-Crafts" reactions have already been described using α,α-dichloromethylbenzene (also known as benzal chloride) as reactant. Siwek *et al*., for example, have shown the coupling of two fully deuterated benzene molecules with benzal chloride in the presence of an aluminum chloride heterogeneous Lewis acid catalyst (Siwek et al.: Activation of Chlorinated Methanes at the Surface of Nanoscopic Lewis Acidic Aluminum Fluorides. ChemCatChem 2017, 9, 839-845.). Li *et al*., in turn, have coupled two 10-phenyl-10H-phenotiazine molecules with benzal chloride in the presence of three equivalents of the Lewis acid catalyst AlCl₃ (Li et al.: Synthesis of bis(N-phenylphenothiazinyl-3-yl)toluene iodide. Dyes Pigm. 2001, 49, 181-186.) Moreover, Ruiz *et al.* and Ruiz-Molina, *et al.* have described the use of benzal chloride as a reactant in a Friedel-Crafts reaction in order to gain highly chlorinated triphenylmethane dendrimers (Ruiz et al.: Synthesis of a Sterically Congested Highly Chlorinated Triphenylmethane Dendrimer, Synlett 1997, 1205-1207; Ruiz-Molina, et al.: Drawbacks Arising from the High Steric Congestion in the Synthesis of New Dendritic Polyalkylaromatic Polyradicals, J. Org. Chem. 1997, 62, 9009-9017). To achieve this, three equivalents AlCl₃ have been added to the reaction mixture as catalyst. Furthermore, Castaner and Riera have prepared perchloropolyphenyl-*p*-xylenes *via* Friedel-Crafts type chemistry using 1,2,3,4,5-pentachloro-6-(dichloromethyl)benzene or benzene as a reactant (Castaner and Riera: Highly crowded perchloropolyphenyl-p-xylylenes with exceptional thermal stability, J. Org. Chem. 1991, 56, 5445-5448). This reaction is carried out in the presence of seven equivalents AlCl₃. However, none of the described reactions has been investigated for coupling two aromatic rings bearing a carbonate group.

Based on this prior art, it was a further object of the present invention to provide a process for preparing a polycarbonate (other than the interphase phosgenation or the melt transesterification method) and to provide a polycarbonate as such, the process and the polycarbonate being based on existing, but also novel aromatic building blocks, especially bio-based building blocks. Preferably, this process should be economically and ecologically beneficial. Moreover, this process preferably should result in a polycarbonate having improved properties, especially with respect to mechanical and/or optical properties, heat resistance and/or weatherability.

At least one of the above-mentioned objects, preferably all of these objects have been solved by the present invention.

Surprisingly, the inventors found a process for preparing a polycarbonate that provides an alternative to known processes such as interphase phosgenation or melt transesterification. More surprisingly, the inventors identified a process for preparing a polycarbonate with a repeating unit comprising two aromatic moieties being linked with each other and - within the repeating unit - one of the aromatic moieties being substituted with a carbonate group. Still surprisingly, the inventors found a process for preparing a polycarbonate with a repeating unit comprising two aromatic moieties being linked with each other and - within the repeating unit - one of the aromatic moieties being substituted with a carbonate group, wherein the carbonate group is introduced to the repeating unit without the need of separately forming the carbonate group. As mentioned, the inventors were able to find a process for preparing a polycarbonate, including a reaction for the formation of the repeating unit, comprising linking of two aromatic moieties with each other. Such a reaction mandatorily requires that the aromatic moieties comprise carbonate substituents in order to form a polymer backbone with repeating units, each repeating unit comprising a carbonate group substituting one of the aromatic moieties. Confronted with this objective, the inventors then identified a process for preparing a polycarbonate with a repeating unit that comprises two aromatic moieties being linked with each other, and - within the repeating unit - one of the aromatic moieties being substituted with a carbonate group, wherein said carbonate group is not affected by the process as such. In this context the term "affected" preferably means that the carbonate is not degraded.

Furthermore, the inventors identified a polycarbonate, obtainable by the process according to the invention. Also, the inventors identified a polycarbonate comprising novel chemical and physical properties when compared to polycarbonates known from the state of the art.

The inventors have identified a process and a polycarbonate, that employ/comprise existing, but also novel aromatic building blocks, especially bio-based building blocks. Also, the inventors identified a process for preparing a polycarbonate with economic and ecologic efforts. The process identified by the inventors results in a polycarbonate having improved properties, in particular with respect to mechanical and/or optical properties, heat resistance and/or weatherability. The same applies to the polycarbonate as such.

Surprisingly, it was identified that the Friedel-Crafts alkylation employing dichloromethylbenzenes with a structure of formula (II) and diaryl carbonates with a structure of formula (I) can be used in order to link two aromatic moieties bearing a carbonate group, preferably both bearing a carbonate group, with a substituted alkyl bridge. This reaction as such can be used according to the present invention to polymerize such aromatic moieties to give a polycarbonate. This reaction can be used for existing building blocks, but also for novel, in particular bio-based building blocks (such as guaiacol carbonate, also known as bis(2-methoxyphenyl) carbonate, and derivatives thereof, for example bis(2-methoxy-4-propylphenyl) carbonate). Moreover, the resulting polycarbonate obtained from this process preferably comprises improved properties, in particular with respect to mechanical and/or optical properties, heat resistance and/or weatherability.

Accordingly, the present invention provides a process for preparing a polycarbonate using electrophilic aromatic substitution, comprising a reaction of a compound with a structure of formula (I) 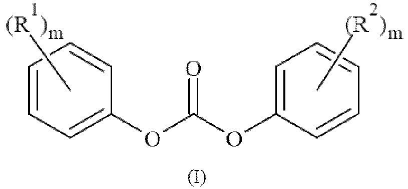 and a compound with a structure of formula (II) 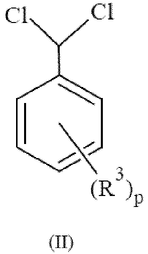 in the presence of a Lewis acid catalyst, preferably a metal- or transition metal-based Lewis acid catalyst, yielding a polycarbonate comprising a repeating unit with a structure of formula (III) 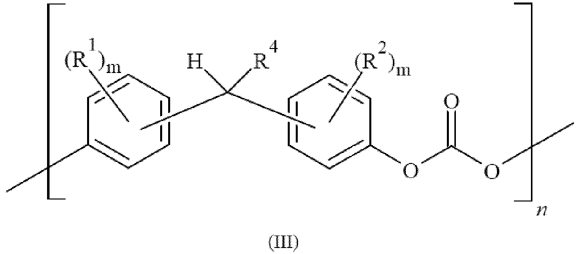 wherein the repeating unit with the structure of formula (III) comprises two aromatic rings, a carbonate group -OC(=O)O- and a linking group -CHR⁴-, wherein one of the two aromatic rings is substituted with the carbonate group, the two aromatic rings are linked *via* the linking group and the linking group in each repeating unit independently is either in *ortho-, meta-* or *para*-position with respect to the carbonate group, and wherein
- each m independently is 1 to 4, preferably 1 to 3,
- each R¹ and R² independently represents a R¹ substituent and a R² substituent, respectively, being capable of activating the aromatic ring which it substitutes by a mesomeric effect and/or an inductive effect, with the proviso that at least one R¹ substituent and additionally at least one R² substituent exhibits a +M effect or a +I effect,
- p is 0 to 5, preferably 0 to 3, more preferably 0 or 1,
- each R³ independently represents a R³ substituent independently representing an alkyl group, an alkoxy group, a halogen atom, a trifluoromethyl group, a carbonyl group with ketone or ester functionality, or a nitro group,
- R⁴ represents a phenyl group which is optionally substituted one to five times, preferably one to three times, more preferably one time, by an alkyl group, an alkoxy group, a halogen atom, a trifluoromethyl group, a carbonyl group with ketone or ester functionality, a nitro group or a combination of these and
- n is the number of repeating units, preferably 6 to 60,
and wherein in case neither any of the m = 1 to 4 R¹ substituents nor any of the m = 1 to 4 R² substituents exhibits a +M effect, only one R¹ substituent or one R² substituent exhibits a +I effect.

Polycarbonates in the context of the present invention are either homopolycarbonates or copolycarbonates; the polycarbonates may be linear or branched depending on the type of monomers used in the process of the present invention. For the purposes of the present invention, the expression "bio-based" is understood as meaning that the relevant chemical compound is at the filing date available and/or obtainable *via* a renewable and/or sustainable raw material and/or preferably is such a renewable and/or sustainable raw material. A renewable and/or sustainable raw material is preferably understood as meaning a raw material that is regenerated by natural processes at a rate that is comparable to its rate of depletion (see CEN/TS 16295:2012). The expression is used in particular to distinguish it from raw materials produced from fossil raw materials, also referred to in accordance with the invention as petroleum-based. Whether a raw material is bio-based or petroleum-based can be determined by the measurement of carbon isotopes in the raw material, since the relative amounts of the carbon isotope C¹⁴ are lower in fossil raw materials. This can be done, for example, in accordance with ASTM D6866-18 (2018) or ISO16620-1 to -5 (2015) or DIN SPEC 91236 2011-07. Exemplary bio-based carbonates in the sense of this invention are guaiacol carbonate and bis(2-methoxy-4-propylphenyl) carbonate.

According to the present invention reference is made to an electrophilic aromatic substitution. This process is known to the person skilled in the art and is described in various textbooks dealing with organic chemistry. The process according to the present invention is based on a Friedel-Crafts alkylation reaction, but includes amendments to the classical name reaction. Therefore, reference is rather made to the more general electrophilic aromatic substitution. However, the person skilled in the art knowing and understanding the concepts of the Friedel-Crafts alkylation reaction and once having perceived the present invention can transfer the principles of this general concept to the amendments of the process of the present invention.

Moreover, according to the present invention reference is made to a substituent (of an aromatic ring) that is capable of activating the aromatic ring which it substitutes by a mesomeric effect and/or an inductive effect. In the context of an electrophilic aromatic substitution, this concept is known to the person skilled in the art.

Preferably, the term "mesomeric effect" or M effect refers to the known resonance effect. Still preferably, the term refers to the delocalization of electrons in a molecule by the interaction of two pi bonds or between a pi bond and a lone pair of electrons present on an adjacent atom. The term is preferably used to describe the electronic effect of a substituent on an aromatic moiety based on relevant resonance structures. It often is symbolized by the letter M. The mesomeric effect can be negative (-M) when the substituent withdraws electrons from the aromatic ring through pi bonds - called resonance electron withdrawal. The effect can also be positive (+M, called resonance electron donation) when the substituent donates electrons through the pi bonds to the aromatic ring.

Preferably, the term "inductive effect" or I effect refers to the displacement of electrons *via* sigma bonds towards a more electronegative atom. Due to the inductive effect one end of a bond obtains a partial positive charge and the other end a partial negative charge. Relative inductive effects of substituents bonded to an aromatic ring are described with reference to hydrogen. For example, a substituent with a +I effect (electron-donating character) donates its sigma electrons to the aromatic ring more strongly than hydrogen will. In contrast, a substituent with a -I effect (electron-withdrawing character) will more strongly withdraw or accept the sigma electrons compared to hydrogen.

The M and I effect in the context of an electrophilic aromatic substitution are known to the person skilled in the art. It is known that existing substituent groups on an aromatic ring affect the overall reaction rate or have a directing effect on the positional isomer of the products that are formed. Here, an electron-donating group preferably is an atom or functional group that donates some of its electron density into a conjugated pi system *via* mesomeric or inductive effects. This makes the pi system more nucleophilic. In terms of regioselectivity, some existing substituent groups on the aromatic ring promote further substitution at the *ortho-* or *para-*position(s) with respect to themselves. Other groups favor further substitution at the *meta-*position. Those groups are known to the person skilled in the art. Substituents exhibiting a +I or +M effect direct to the *ortho-* and/or *para*-position with respect to themselves. Substituents exhibiting a -I or -M effect direct to the *meta-position.* As known to the person skilled in the art, an M effect of a substituent is in principle more important than an I effect. This means that a +M effect can overrule a small -I effect.

According to the present invention, it was found that each of the aromatic moieties (aromatic rings) of the compound with the structure formula (I) requires an additional substituent other than the carbonate group in order for the reaction of the present invention to work. Thus, in formula (I) m has to be at least 1 for both R¹ and R², i.e. at least one R¹ substituent and at least one R² substituent is present to substitute the corresponding aromatic rings. Furthermore, it was found that said at least one R¹ substituent and said at least one R² substituent must each exhibit a +M effect and/or a +I effect for the described reaction to work. Such substituents may improve selectivity and/or reactivity of the reaction. Therefore, each m in formula (I) and (III), respectively, independently is 1 to 4, preferably 1 - 3, more preferably 2 or 3, more preferably 1 or 2, more preferably 1 or 3, most preferably 1, most preferably 2, most preferably 3, most preferably 4. The person skilled in the art knows that steric effects need to be considered, too, as a bulky substituent at the aromatic ring might affect the reaction and the resulting product. Accordingly, by choosing the R¹ and/or R² substituent(s) of the aromatic ring, the person skilled in the art is able to tailor the structure of the resulting polycarbonate.

Moreover, according to the present invention it was found that in case neither any of the m = 1 to 4 R¹ substituents nor any of the m = 1 to 4 R² substituents exhibits a +M effect, only one R¹ substituent or one R² substituent may exhibit a +I effect in order to yield a polycarbonate.

It was found that the process according to the present invention can be used to obtain a regular polymer backbone having a linking group (-CHR⁴-) between two linked aromatic moieties (aromatic rings) which is either in *ortho-* or *meta-*position with respect to the carbonate group. According to the present invention, *ortho, meta* or *para* always refer to the position at the aromatic ring with respect to the mandatory carbonate group at the same ring, if not stated otherwise. The carbonate group has a small +M effect, directing an electrophile to the *para-*position with respect to the carbonate group. However, this effect can be overruled by additional substituents at the aromatic rings. According to the present invention, each R¹ and R² in formula (I) and/or (III) independently represents an additional R¹ and R² substituent, respectively, being capable of activating the aromatic ring which it substitutes by a mesomeric effect and/or an inductive effect, with the proviso that at least one R¹ substituent and additionally at least one R² substituent exhibits a +M effect or a +I effect. Preferably, all additional R¹ and/or R² substituents exhibit a +I and/or +M effect. The at least one additional R¹ and R² substituents are required to activate the aromatic ring. This means that the reactivity towards the electrophilic aromatic substitution is improved by the at least one additional R¹ and R² substituent when being compared to a substrate that solely comprises a carbonate group (i.e. m would be 0). Furthermore, it has been found that the at least one additional R¹ and R² substituent typically overrules the *para*-directing effect of the carbonate group, so that a selectivity is enhanced, and a polymer can be prepared which comprises an *ortho-* or *meta-*linkage with respect to the carbonate group when referring to a repeating unit. If, for example, the at least one R¹ and/or R² substituent has a *para*-directing effect (i.e. the at least one R¹ and/or R² substituent is capable of directing an electrophile to a position at the aromatic ring which is in *para*-position with respect to the at least one R¹ and/or R² substituent, respectively) and this at least one R¹ and/or R² substituent is in *ortho*-position with respect to the carbonate group substituting the same aromatic ring, a *meta*-linkage with respect to the carbonate group is obtained. Thus, a selective coupling occurs, wherein a polycarbonate is obtained which comprises essentially *meta*-linkages*.* If, in turn, at least one *para*-directing R¹ and/or R² substituent is present which is in *meta-position* with respect to the carbonate group substituting the same aromatic ring, an *ortho*-linkage and *para*-linkage with respect to the carbonate group is obtained. It is to be noted that a "*para*-directing" R¹ and/or R² substituent is generally to be understood as *ortho-* and *para-* directing substituent (in contrast to substituent that solely directs to a *meta-* position). The skilled person knows that a substituent may either be *para-*/*ortho-* directing or *meta-* directing. Transferred to the present case, the *"para*-directing" R¹ and/or R² substituent principally directs in *para-* and *ortho-* position. In case that such a *"para*-directing" R¹ and/or R² substituent (which is generally *ortho-* and *para-* directing) is present in *ortho-* position with respect to the carbonate group (substituting the same aromatic ring), sterical hindrance leads to a fully *para*-selective substitution (leading to *meta*-linkages with respect to the carbonate group). In this case no *ortho-* substitution is observed. However, in case that the *"para*-directing" R¹ and/or R² substituent (which is generally *ortho-* and *para-*directing) is present in *meta-position* with respect to the carbonate group (substituting the same aromatic ring), less sterical hindrance occurs and both *ortho-* and *para-* substitution can be observed (leading to *ortho-* and *para-* linkages with respect to the carbonate group). Examples for such "*para*-directing" substituents are alkoxy groups.

The at least one R¹ and/or R² substituent can also be positioned in *para*-position with respect to the carbonate group at the same aromatic ring. The person skilled in the art knows how the directing effect of the additional R¹ and/or R² substituent(s) and their position at the aromatic ring with respect to the carbonate group substituting the same aromatic ring can affect the resulting linkages in the polycarbonate. The effect of a selective reaction is even more pronounced if two or three R¹ and/or R² substituents are present in addition to the carbonate group which are capable - due to their chemical nature - to direct the electrophile to the very same carbon atom. The person skilled in the art knows how more substituents affect the resulting polycarbonate.

Additionally, the compound of formula (II) determines the structure of the linking group -CHR⁴- in formula (III). Accordingly, R⁴ represents a phenyl group which is optionally substituted one to five times, preferably one to three times, more preferably one time, by an alkyl group, an alkoxy group, a halogen atom, a trifluoromethyl group, a carbonyl group with ketone or ester functionality, a nitro group, or a combination of these, depending on the structure of the compound of formula (II) used in the reaction. The compound of formula (II) can be substituted by p = 0 to 5, preferably 0 to 3, more preferably 0 or 1, R³ substituents, each independently representing an alkyl group, an alkoxy group, a halogen atom, a trifluoromethyl group, a carbonyl group with ketone or ester functionality, or a nitro group. According to the present invention, it was found that the compound of formula (II) does not need any substituent to conduct the process of the present invention. Thus, in formula (II) p can be 0, i. e. there is no R³ substituent. However, an R³ substituent at the aromatic ring can be beneficial for the reaction of the claimed process. Therefore, p in formula (II) can be 0 to 5, more preferably 0 to 3, still more preferably 0 or 1, most preferably 0, most preferably 1, most preferably 2, most preferably 3, most preferably 4, most preferably 5. The person skilled in the art knows that steric effects need to be considered, too, because a bulky substituent at the aromatic ring might affect the resulting product. Accordingly, by choosing the R³ substituent(s) of the compound of formula (II), the person skilled in the art is able to tailor the structure of the resulting linking group in the repeating unit with a structure of formula (III) and therefore, is able to tailor the structure of the polycarbonate as a whole.

"Alkyl" in the context of the invention, for example and if not mentioned differently, refers to a linear or branched hydrocarbon which is saturated and therefore, it comprises only single bonds between adjacent carbon atoms. Preferably, alkyl groups according to the present invention have 1 to 6 carbon atoms and, thus, comprise methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl or 1-ethyl-2-methylpropyl. These structures can be limited in choice, in case the invention defines the carbon atoms of an alkyl group in a different manner.

"Alkoxy" in the context of the invention, for example and if not mentioned differently, refers to a linear or branched alkyl group singularly bonded to oxygen (-OR). Preferably, alkoxy groups according to the present invention have 1 to 6 carbon atoms and, thus, comprise methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy. These structures can be limited in choice, in case the invention defines the carbon atoms of an alkoxy group in a different manner.

The above enumerations should be understood by way of example and not as a limitation.

A "halogen atom" in the context of the invention, if not mentioned differently, refers to fluorine (F), chlorine (Cl), bromine (Br), or iodine (I). Preferably, a halogen atom is F, Cl, Br or I, more preferably it is Cl or Br.

As mentioned above, R⁴ represents a phenyl group which is optionally substituted one to five times, preferably one to three times, more preferably one time, by an alkyl group, an alkoxy group, a halogen atom, a trifluoromethyl group, a carbonyl group with ketone or ester functionality, a nitro group, or a combination of these. Accordingly - as also mentioned above - in a compound of formula (II) each R³ substituent may independently represent an alkyl group, an alkoxy group, a halogen atom, a trifluoromethyl group, a carbonyl group with ketone or ester functionality, or a nitro group. In general, any electron donating or electron withdrawing substituent may substitute said phenyl group of R⁴ or may represent said R³ substituent. The meaning of "Alkyl", "Alkoxy" or a "halogen atom" has been defined above.

A trifluoromethyl group is generally understood as substituent according to the formula -CF₃. A "carbonyl group" with respect to the present invention may refer to an aldehyde group, a substituent comprising a ketone structure, a carboxylate ester, an amide, an enone, an acyl halide, an acid anhydride or an imide. A nitro group is to be understood as -NO₂ group.

Furthermore, formula (III) recites "n" as number of repeating units. Preferably, n is 6 to 60, more preferably it is 10 to 55, even more preferably it is 20 to 50, still more preferably it is 25 to 45 and most preferably it is 30 to 40. However, it is to be noted that n may be < 6 or n may be > 60. Depending on the number of repeating units, the chemical and physical properties of the polycarbonate may change. Depending on the number of repeating units, microscopic and/or macroscopic structures of the polycarbonate may change as well. By the preferred number n of repeating units, an optimum balance between processability and mechanical properties of the yielded polycarbonate can be established. Consequently, the skilled person may choose the number of n to tailor dedicated properties of the polycarbonate.

According to the present invention, it was found that a Lewis acid is required for the reaction. The Lewis acid acts as a catalyst. In such a function the Lewis acid catalyst acts as an electron pair acceptor, thereby increasing the reactivity of a substrate. In addition to accelerating reactions, Lewis acid catalysts are able to impose regioselectivity and stereoselectivity in many cases. The term "Lewis acid" is known to the person skilled in the art. Preferably, a metal- or transition metal-based Lewis acid catalyst is used for the process described herein.

Moreover, preferably a process is provided, wherein each R¹ substituent and each R² substituent independently represents an alkyl group or an alkoxy group, more preferably an alkyl or alkoxy group having 1 to 6 carbon atoms. Alkyl groups exhibit a +I effect, alkoxy groups exhibit a +M effect. A substituent which has 1 to 6 carbon atoms is preferred for steric reasons. However, substituents having a higher number of carbon atoms (> 6 carbon atoms) may also form the R¹ and/or R² substituents. Still preferably each R¹ substituent and each R² substituent independently represents methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n-*hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

Further, in a preferred embodiment of the present invention a process is provided, wherein R⁴ represents a phenyl group which is not substituted or substituted one to five times, preferably one to three times, more preferably one time, by an alkyl group having 1 to 6 carbon atoms, an alkoxy group having 1 to 6 carbon atoms, F, Cl, Br, I, a trifluoromethyl group, a carbonyl group with ketone or ester functionality, a nitro group, or a combination of these. Alkyl groups exhibit a +I effect, alkoxy groups and halogen atoms exhibit a +M effect. For steric reasons it is preferred that alkyl or alkoxy substituents have 1 to 6 carbon atoms. If R⁴ is substituted by a halogen atom, it is preferably selected from F, Cl, Br or I, more preferably Cl or Br. Thus, preferably each R⁴ substituent independently represents a phenyl group which is not substituted or substituted one to five times, preferably one to three times, more preferably one time, by methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy, 1-ethyl-2-methylpropoxy, F, Cl, Br or I, a trifluoromethyl group, a carbonyl group with ketone or ester functionality, a nitro group, or a combination of these.

Accordingly, the compound of formula (II) represents a dichloromethylbenzene being not substituted or substituted one to five times, preferably one to three times, more preferably one time, by an alkyl group, an alkoxy group, a halogen atom, a trifluoromethyl group, a carbonyl group with ketone or ester functionality, a nitro group, or a combination of these. In a preferred embodiment of the present invention, the compound of formula (II) is selected from benzal chloride, 1-(dichloromethyl)-4-methylbenzene or 1-bromo-4-(dichloromethyl)benzene. For benzal chloride, p is 0 and therefore, no R³ substituent is present. For 1-(dichloromethyl)-4-methylbenzene, p is 1 and the R³ substituent is a methyl group located in *para*-position with respect to the dichloromethyl group substituting the same aromatic ring. For 1-bromo-4-(dichloromethyl)benzene, p is 1 and the R³ substituent is a Br atom located in *para*-position with respect to the dichloromethyl group substituting the same aromatic ring. All of these exemplary dichloromethylbenzenes which are not substituted or substituted with an R³ substituent exhibiting either a +M effect or a +I effect could successfully serve as a coupling partner for diaryl carbonates in model reactions.

Preferably, in the process of the present invention the compound with the structure of formula (I) comprises a structure of formula (Ia) 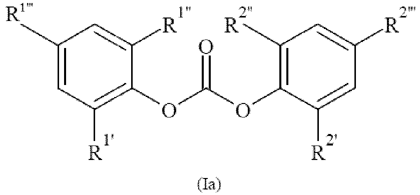 and the reaction of the compound with the structure of formula (Ia) and the compound with the structure of formula (II) yields a polycarbonate comprising a repeating unit with a structure of formula (IIIa) 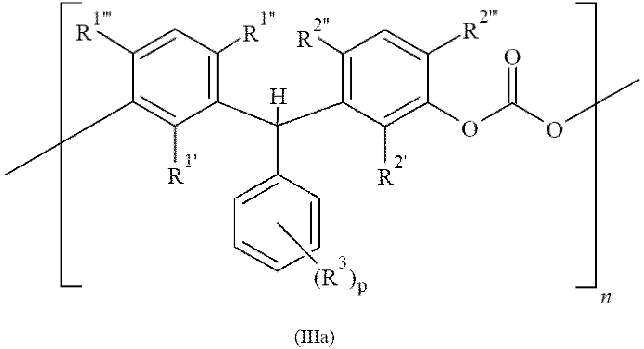 wherein
- R¹ , R^{1"} and R^{1‴} represent the R¹ substituents in formulas (I) and (III), respectively,
- R^{2'}, R^{2"} and R^{2‴} represent the R² substituents in formulas (I) and (III), respectively,
- p is 0 to 5, preferably 0 to 3, more preferably 0 or 1,
- each R³ independently represents an R³ substituent independently representing an alkyl group, an alkoxy group, a halogen atom, a trifluoromethyl group, a carbonyl group with ketone or ester functionality, or a nitro group,
- n is the number of repeating units, preferably 6 to 60,
- R^{1'}, R^{1"}, R^{2'} and R^{2"} independently represent a hydrogen atom or a substitute which exhibits a +M effect or a +I effect, preferably an alkyl group or an alkoxy group, more preferably an alkyl or alkoxy group having 1 to 6 carbon atoms, most preferably methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n-*hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy, and
- R^{1‴} and R^{2‴} independently represent a substitute which exhibits a +M effect or a +I effect, preferably an alkyl group or an alkoxy group, more preferably an alkyl or alkoxy group having 1 to 6 carbon atoms, most preferably methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n-*butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

Preferably, the yielded polycarbonate comprises a repeating unit with a structure of formula (III). More preferably, the yielded polycarbonate comprises a repeating unit with a structure of formula (IIIa). The person skilled in the art knows how the choice of any compound of formula (I) or (Ia) affects the resulting polycarbonate comprising a repeating unit with a structure of formula (III) or (IIIa), respectively. Thus, the skilled person may predict the impact of the structure of the compound of formula (I) or (Ia). In general, the m = 1 to 4 R¹ and R² substituents of the compound of formula (I) can be in *ortho-, meta-* or *para*-position with respect to the carbonate group. In a preferred embodiment of the invention, the compound of formula (I) or (Ia) is selected from guaiacol carbonate, bis(3-methoxyphenyl) carbonate or bis(2-(*tert*-butyl)-4-methoxyphenyl) carbonate. For guaiacol carbonate, m is 1 for R¹ as well as for R², and both the R¹ and R² substituents are formed by a methoxy group, each located in *ortho*-position with respect to the carbonate group substituting the same aromatic ring. For bis(3-methoxyphenyl) carbonate, m is 1 for R¹ as well as for R² and both the R¹ and R² substituent are formed by a methoxy group, each located in *meta-*position with respect to the carbonate group substituting the same aromatic ring. For bis(2-(*tert*-butyl)-4-methoxyphenyl) carbonate, m is 2 for R¹ as well as for R², wherein one R¹ and one R² substituent are a methoxy group, each located in *para*-position with respect to the carbonate group substituting the same aromatic ring and one R¹ and one R² substituent are a *tert-*butyl group, each located in *ortho-*position with respect to the carbonate group substituting the same aromatic ring. From these exemplary carbonates, guaiacol carbonate and bis(2-(*tert*-butyl)-4-methoxyphenyl) carbonate represent a compound with a structure of formula (Ia), while bis(3-methoxyphenyl) carbonate does not. Yet, all of these exemplary diaryl carbonates being substituted with different R¹ and R² substituents exhibiting a +M effect (here: methoxy) or a +I effect (here: *tert*-butyl) were successfully coupled with a dichloromethylbenzene in model reactions.

According to a further preferred embodiment of the present invention, either a halogenated solvent and/or an aromatic solvent or no solvent at all is used. This means that the reaction can be performed neat or in the presence of a halogenated solvent and/or an aromatic solvent. Preferably, a solvent is used for the reaction, as in absence of solvent a solid mixture may be obtained. More preferably, in case a solvent is used, it is selected from dichloromethane, dichloroethane or toluene. Still more preferably, the solvent used for the reaction is dichloromethane or dichloroethane, as the inventors found that by using toluene undesired side products were observed. Most preferably, dichloromethane is used as solvent. Also, the solvent can be employed dry or analytical, as the inventors identified that this did not negatively affect the yield of the desired polycarbonate.

Preferably, the Lewis acid catalyst used for the reaction is a metal- or transition metal-based Lewis acid catalyst. More preferably, it comprises a metal or transition metal selected (preferably as a metal salt comprising said metal or transition metal) from Al, Zn, Fe, Cu, Sc, Ti, Bi, Te, Nb, Sn or In, still more preferably Fe, In, Zn or Bi. The Lewis acid catalyst comprising said metal salt may have a structure of MₓL_{y}, wherein M is a metal or transition metal atom, x is the number of metal or transition metal atoms, L is a suitable organic or inorganic ligand such as Cl, Br, I, OTf or OAc, and y is the number of ligands L. Said ligands L affect the solubility of the Lewis acid as certain combinations of metals (and transition metals) and ligands will not be soluble in the employed solvent. Even more preferably, the Lewis acid catalyst is selected from AlCl₃, ZnCl₂, ZnBr₂, Zn(OTf)₂, FeBr₃, FeCl₃, Fe(OAc)₂, Cu(OTf)₂, Sc(OTf)₃, TiCl₄, BiCl₃, Bi(OTf)₃, TeCl₄, NbCl₅, SnCl₄, InCl₃ or In(OTf)₃. All of the cited Lewis acids are capable in promoting coupling between the compound of formula (I) or (Ia) and the compound of formula (II), at least when added in a stoichiometric amount. Most preferably, FeBr₃, FeCl₃ or InCl₃ is chosen as a Lewis acid catalyst as these can be added in a substoichiometric amount to result in the desired reaction. Among these, FeBr₃ is preferred due to cost and practical reasons.

In a preferred embodiment of the present invention, the Lewis acid catalyst is added in a stoichiometric or substoichiometric amount, preferably an amount of 0.025 to 2.2 molar equivalents, more preferably 0.025 to 0.2 molar equivalents, with respect to the compound of formula (I) or (Ia), respectively. Using said amounts of Lewis acid catalyst have been identified to result in satisfying yield of the desired polycarbonate.

According to the present invention, the process comprises a reaction, where a compound of formula (I) or (Ia) is reacted with a compound of formula (II). The compound of formula (I) or (Ia), respectively, is a diaryl carbonate, the compound of formula (II) is a substituted dichloromethylbenzene. Moreover, the compound of formula (II) is preferably added in an amount of 0.5 to 1.1 molar equivalents, more preferably 1.0 molar equivalent, with respect to the compound of formula (I) or (Ia), respectively. It was identified that having 0.5 to 1.1 equivalents, preferably 1.0 equivalent, of the compound of formula (II) with respect to the compound of formula (I) or (Ia), respectively, is beneficial for obtaining a satisfying yield.

Preferably, the reaction is carried out at a reaction temperature of 30 to 70 °C, more preferably 30 to 40 °C. It has been found that the preferred reaction temperature is beneficial for the yield of the desired polycarbonate. These temperatures allow relatively mild reaction conditions, which is advantageous in the context of sustainability, reaction efficiency and reducing energy costs.

The skilled person is able to find appropriate reaction times for the present invention based on the lab scale experiments of the present invention.

The reaction according to the invention can be performed in an open or sealed reactor. Moreover, each of the process steps can optionally be performed with or without the presence of an inert gas. It was found that the presence of air did not hamper the desired reaction and the yield of the desired polycarbonate.

In another preferred embodiment of the present invention, a Lewis base, preferably Na₂CO₃, is added to the reaction mixture. The addition of a Lewis base to the reaction mixture allows the pH to be neutralized and thus, to stabilize the carbonate group. Preferably, the Lewis base is added in an amount of 2.0 to 4.0 molar equivalents, more preferably 2.0 molar equivalents, with respect to the compound of formula (I) or (Ia), respectively, because a higher amount of base was observed to diminish the yield of the desired polycarbonate and undesired side products were observed.

Further, it is preferred that the compound of formula (I) or (Ia), respectively, being added to the reaction, comprises a purity of at least 90 %, more preferably at least 95 %, most preferably 100 %. In dedicated experiments, the inventors found that the yield of the desired polycarbonate increases with the purity of the compound of formula (I) or (Ia), respectively. The purity is an important factor for the reaction, as free hydroxy groups (coming from impurities, e. g. guaiacol) complexes (Lewis acid - Lewis base interaction) with the catalyst and destroys its catalytic activity.

In another aspect of the present invention, polycarbonates obtainable by the process of the present invention are provided. Those polycarbonates exhibit improved properties, in particular with respect to mechanical and/or optical properties, heat resistance and/or weatherability.

The definitions/explanations given above in context of the described process can directly be transferred to the polycarbonate described before and after this passage. All mandatory or preferred/advantageous features described in relation to the process according to the invention may form mandatory or preferred/advantageous features of the polycarbonate according to the invention as well.

As mentioned before, the objects of the present invention are (at least partially) solved by a polycarbonate.

In particular, the invention relates to a polycarbonate comprising a repeating unit with a structure of formula (III) 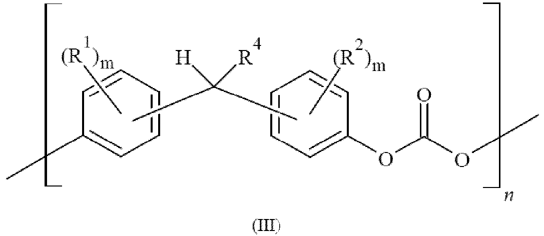 wherein
- the repeating unit with the structure of formula (III) comprises two aromatic rings, a carbonate group -OC(=O)O- and a linking group -CHR⁴-, wherein one of the two aromatic rings is substituted with the carbonate group, the two aromatic rings are linked *via* the linking group and the linking group in each repeating unit independently is either in *ortho-* or *meta-*position with respect to the carbonate group,
- each m independently is 1 to 4, preferably 1 to 3,
- each R¹ and R² independently represents an R¹ substituent and an R² substituent, respectively, being capable of activating the aromatic ring which it substitutes by a mesomeric effect and/or an inductive effect, with the proviso that at least one R¹ substituent and additionally at least one R² substituent exhibits a +M effect or a +I effect,
- R⁴ represents a phenyl group which is optionally substituted one to five times, preferably one to three times, more preferably one time, by an alkyl group, an alkoxy group, a halogen atom, a trifluoromethyl group, a carbonyl group with ketone or ester functionality, a nitro group, or a combination of these and
- n is the number of repeating units, preferably 6 to 60,
wherein in case neither any of the m = 1 to 4 R¹ substituents nor any of the m = 1 to 4 R² substituents exhibits a +M effect, only one R¹ substituent or one R² substituent exhibits a +I effect.

With respect to the polycarbonate, preferably, each R¹ substituent and R² substituent independently represents an alkyl group or an alkoxy group, preferably an alkyl or alkoxy group having 1 to 6 carbon atoms, more preferably methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n-*hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

With respect to the polycarbonate, preferably, R⁴ represents a phenyl group which is not substituted or substituted one to five times, preferably one to three times, more preferably one time, by
- an alkyl group having 1 to 6 carbon atoms, preferably methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl or 1-ethyl-2-methylpropyl,
- an alkoxy group having 1 to 6 carbon atoms, more preferably methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy,
- F, Cl, Br or I, preferably Cl or Br,
- a trifluoromethyl group, a carbonyl group with ketone or ester functionality, or a nitro group,
or a combination of these.

With respect to the polycarbonate, preferably, the polycarbonate comprises a repeating unit with a structure of formula (IIIa) 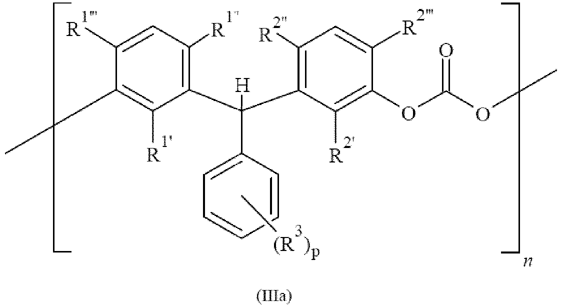 wherein
- R¹ , R^{1"} and R^{1‴} represent the R¹ substituents in formula (III),
- R^{2'}, R^{2"} and R^{2‴} represent the R² substituents in formula (III),
- each R³ independently represents an R³ substituent independently representing an alkyl group, an alkoxy group, a halogen atom, a trifluoromethyl group, a carbonyl group with ketone or ester functionality, or a nitro group,
- p is 0 to 5, preferably 0 to 3, more preferably 0 or 1,
- n is the number of repeating units, preferably 6 to 60,
- R^{1'}, R^{1"}, R^{2'} and R^{2"} independently represent a hydrogen atom or a substitute which exhibits a +M effect or a +I effect, preferably an alkyl group or an alkoxy group, more preferably an alkyl or alkoxy group having 1 to 6 carbon atoms, most preferably methyl, ethyl, *n*-propyl, isopropyl, *n*-butyl, *sec*-butyl, *tert-butyl, n*-pentyl, 1-methylbutyl, 2-methylbutyl, 3-methylbutyl, neopentyl, 1-ethylpropyl, cyclohexyl, cyclopentyl, *n-*hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy, and
- R^{1‴} and R^{2‴} independently represent a substitute which exhibits a +M effect or a +I effect, preferably an alkyl group or an alkoxy group, more preferably an alkyl or alkoxy group having 1 to 6 carbon atoms, most preferably methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n-*butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

A polycarbonate comprising the above features exhibits improved properties, in particular with respect to mechanical and/or optical properties, heat resistance and/or weatherability.

### Brief description of the Figures

Figure 1. Nano-electrospray mass spectrum in DMSO of inventive example 106.
Figure 2. Nano-electrospray mass spectrum in DMSO of inventive example 107.
Figure 3. Nano-electrospray mass spectrum in DMSO of inventive example 108.

### Examples

The following examples are used to describe the invention. It is to be noted that sometimes reactions are studied that do not represent polymerizations, but rather study the coupling (linking) of one aromatic moiety with another aromatic moiety (*via* a linking group), wherein at least one of those moieties comprises a carbonate group. However, based on those examples, the person skilled in the art can easily conclude that and how a polymerization reaction as such can be performed. Also, certain examples (experiments) did not lead to successful reactions or yield. These examples are indicated as "comparative example", wherein examples leading to desired reaction product in a desirable yield are indicated as "reference example". It may be understood as part of the disclosed invention, but not necessarily being claimed. An example being indicated as "reference" may also refer to structural units being part or being related to structural units of structures according to formulas (I) or (II) of present claim 1. These examples may be referred to as model reactions or alternatives with respect to the claimed subject-matter.

### Materials used in the examples

All solvents and commercially available reagents were used as received.

### Commercially available chemicals

| Chemical | CAS-number | Supplier | Purity (GC) |
|---|---|---|---|
| Benzal chloride | 98-87-3 | TCI | >95 % |
| Triethylamine (NEt₃) | 121-44-8 | Acros | 99% |
| Pyridine | 110-86-1 | Acros Organics | 99.5% |
| 2-Methoxyphenol | 90-05-1 | Acros | 99% |
| 2-Methoxy-4-propylphenol | 2785-87-7 | Sigma-Aldrich | 99% |
| 3-Methoxyphenol | 150-19-6 | Acros-Organics | 97% |
| *o*-Cresol | 95-48-7 | Acros-Organics | 99% |
| 4-Hydroxy-3-*tert-*butylanisole | 121-00-6 | TCI | >98% |
| 4-Dimethylaminopyridine (DMAP) | 1122-58-3 | Fluorochem | 99% |
| Sulfuric acid | 7664-93-9 | Acros Organics | 96%, for analysis |
| Trifluoromethane sulfonic acid | 1493-13-6 | Fluorochem | 99% |
| Acetic acid | 64-19-7 | Alfa Aesar | 99.7%, glacial |
| Hydrogen bromide (HBr) | 37348-16-6 | Acros Organics | 33% in glacial acetic acid |
| 4-Bromobenzaldehyde | 1122-91-4 | TCI | 97% |
| 4-Methylbenzaldehyde | 104-87-0 | Sigma-Aldrich | 97% |
| Tetrabutylammonium iodide | 311-28-4 | Acros Organics | 98% |
| Triphenylphosphine | 603-35-0 | Sigma-Aldrich | 99% |
| 1, 1-Dichloroethane | 75-34-3 | TCI | 95% |
| 1,1-Dichlorodiphenylmethane | 2051-90-3 | Fluorochem | 95% |
| 2,2-Dichloropropane | 594-20-7 | ABCR | 97% |
| Dichloromethyl methyl ether | 4885-02-3 | Sigma-Aldrich | 98% |
| Sodium carbonate | 497-19-8 | Acros Organics | 99.8% for analysis, anhydrous |
| Potassium carbonate | 584-08-7 | Acros Organics | 99%, for analysis, anhydrous |
| Methyl phenyl carbonate | 13509-27-8 | Fluorochem | 97% |
| Diphenyl carbonate | 102-09-0 | TCI | 99% |
| Magnesium perchlorate | 10034-81-8 | Sigma-Aldrich | ACS grade |
| Dimethyl dicarbonate | 4525-33-1 | Sigma-Aldrich | ACS grade |
| Methyl chloroformate | 79-22-1 | Acros | 99% |
| Triphosgene | 32315-10-9 | Fluorochem | 99% |
| Hydrochloric acid (HCl) | 7647-01-0 | Fisher Chemical | analytical reagent grade (36%) |
| Sodium hydroxide (NaOH) | 1310-73-2 | Acros Organics | 98% |
| Magnesium sulfate (MgSO₄) | | Acros-Organics | 99%, extra pure, dried |
| Celite | 68855-54-9 | Chem-Lab NV | not indicated |
| Sodium chloride (NaCl) | 7647-14-5 | Acros-Organics | 99.5% |
| Silica (SiO₂) | 7631-86-9 | Macherey-Nagel | particle size 40-63 µm, pore diameter 60 Å |
| Deuterated chloroform (CDCl₃) | 865-49-6 | Eurisotop | 99.8% D |
| FeCl₃·4H₂O | 10025-77-1 | Sigma-Aldrich | 99% |
| FeBr₃ | 10031-26-2 | Sigma-Aldrich | 98% |
| FeCl₃ | 7705-08-0 | Alfa Aesar | 98% |
| Fe(OAc)₂ | 3094-87-9 | Sigma-Aldrich | 99.98% trace metal analysis |
| TiCl₄ | 7550-45-0 | Acros Organics | 99.9% |
| AlCl₃ | 7446-70-0 | Sigma-Aldrich | 99.98% trace metal analysis |
| Al(OTf)₃ | 74974-61-1 | Acros | 99% |
| ZnCl₂ | 7646-85-7 | Sigma-Aldrich | 99.9% |
| ZnBr₂ | 7699-45-8 | Acros Organics | >98% |
| Cu(OTf)₂ | 34946-82-2 | ABCR | 98% |
| Zn(OTf)₂ | 54010-75-2 | J&K Scientific | 97.5% |
| CuCl₂ | 7447-39-4 | Sigma-Aldrich | 99% |
| Cu(OAc)₂ | 142-71-2 | Sigma-Aldrich | 99.98% trace metal analysis |
| Sc(OTf)₃ | 144026-79-9 | Fluorochem | 99% |
| La(OTf)₃ | 52093-26-2 | TCI | >98% |
| Yb(OTf)₃ | 54761-04-5 | Sigma-Aldrich | 99.98% trace metal analysis |
| BiCl₃ | 7787-60-2 | Acros Organics | 99.98% trace metal analysis |
| Bi(OTf)₃ | 88189-03-1 | Alfa Aesar | 99% |
| TeCl₄ | 10026-07-0 | Sigma-Aldrich | 99% |
| NbCl₅ | 10026-12-7 | Sigma-Aldrich | 99.98% trace metal analysis |
| SnCl₄ | 7646-78-8 | Sigma-Aldrich | 98% |
| SeCl₄ | 10026-03-6 | Sigma-Aldrich | 98% |
| InCl₃ | 10025-82-8 | Strem Chemicals | 99.98% trace metal analysis |
| In(OTf)₃ | 128008-30-0 | Fluorochem | 98% |
| Acetonitrile (ACN, dry) | 75-05-8 | Acros Organics | 99.9%, extra dry |
| Acetone | 67-64-1 | Fisher Chemical | 99.8%, analytical reagent grade |
| n-Butyl acetate | 123-86-4 | Acros Organics | 99%, extra dry |
| Cyclopentyl methyl ether | 5614-37-9 | Acros Organics | 99.5%, extra dry |
| Cyrene | 53716-82-8 | Sigma-Aldrich | 99.5% |
| Dichloromethane (dry) | 75-09-2 | Acros Organics | >99%, extra dry |
| Dichloromethane (DCM) | 75-09-2 | Fisher Chemical | 99.8%, analytical reagent grade |
| Dichloroethane (dry) | 107-06-2 | Acros Organics | 99.5%, extra dry |
| Dimethylcarbonate (dry) | 616-38-6 | Acros Organics | 99%, extra dry |
| Ethyl acetate (EtOAc) | 141-78-6 | Fisher Chemical | 99.8%, analytical reagent grade |
| Gamma valerolacton | 108-29-2 | Sigma-Aldrich | 99% |
| Heptane | 64742-49-0 | Fisher Chemical | Extra pure, but distill prior to use |
| Methanol (dry, MeOH) | 67-56-1 | Acros Organics | 99.8%, extra dry |
| Methanol | 67-56-1 | Fisher Chemical | 99.8%, analytical reagent grade |
| Toluene (dry) | 108-88-3 | Acros Organics | 99.8%, extra dry |
| Tetrahydrofuran (dry) | 109-99-9 | Acros Organics | 99.5%, extra dry |
| *tert*-Butyl methyl ether (MTBE) | 1634-04-4 | Fisher Chemical | Extra Pure, SRL |

### Non-commercial chemicals

### General procedure 1:

A round-bottomed flask equipped with a stir bar was charged with the substituted phenol (1.0 equiv), triethylamine (1.2 equiv) and dichloromethane (25 mL). The mixture was cooled to 0 °C in an ice-water bath. Subsequently, methyl chloroformate (1.2 equiv) was added dropwise over a period of 10 minutes. The mixture was stirred at room temperature for the indicated time. The precipitate was filtered off over a paper filter. The filtrate was extracted with HCl (1 M, 1 x 30 mL), NaOH (0.5 M, 30 mL) and with saturated aqueous NaCl solution (1 x 30 mL). The organic layer was dried over anhydrous MgSO₄, filtered and concentrated *in vacuo.* The product was purified as indicated.

### General procedure 2:

An oven-dried round-bottomed flask equipped with a stir bar was charged with the substituted phenol, triethylamine and dichloromethane (20 mL) under argon atmosphere. The mixture was cooled to 0 °C in an ice-water bath and stirred for 10 minutes. Subsequently, triphosgene dissolved in DCM (4 mL) was added dropwise over a period of 10 minutes. The mixture was stirred at room temperature for the indicated time. The filtrate was extracted with HCl (1 M, 1 x 30 mL), NaOH (0.5 M, 30 mL) and with saturated aqueous NaCl solution (1 x 30 mL). The water layer was extracted with DCM (2 x 30 mL). The combined organic layers were dried over anhydrous MgSO₄, filtered and concentrated *in vacuo.* The product was purified as indicated.

### 2-Methoxyphenyl methyl carbonate

General procedure 1 was applied using 2-methoxyphenol (1.241 g, 10.0 mmol), NEt₃ (1.7 mL, 12.0 mmol) and methyl chloroformate (980 µL, 9.6 mmol) for 2 h. The product was obtained in 80% (1.455 g) yield.

White solid, m.p.: 31-32 °C, ¹H NMR (400 MHz, CDCl₃): δ 7.28-7.24 (m, 1H), 7.19 (dd, *J =* 7.9, 1.6 Hz, 1H), 7.15 (dd, *J* = 8.3, 1.3 Hz, 1H), 6.97 (td, *J* = 7.7, 1.5 Hz, 1H), 3.81 (s, 3H), 3.79 (s, 3H) ppm. ¹³C NMR (101 MHz, CDCl₃): δ 153.3 (C), 150.9 (C), 139.5 (C), 127.3 (CH), 122.4 (CH), 120.6 (CH), 113.0 (CH), 55.8 (CH₃), 55.5 (CH₃) ppm. HRMS for C₉H₁₁O₄ [M+H]⁺ calcd. 183.0652, found 183.0653.

### 2-Methoxy-4-propylphenyl methyl carbonate

A dry 100 mL round-bottomed flask equipped with a stir bar was charged with magnesium perchlorate (223 mg, 1.0 mmol), 2-methoxy-4-propylphenol (8.01 mL, 50 mmol) and dimethyl dicarbonate (10.7 mL, 100 mmol). The flask was flushed with argon and equipped with a reflux condenser. The mixture was stirred at 40 °C for 17 h. After cooling to room temperature, the mixture was filtered over a plug of Celite with MTBE (50 mL). The filtrate was evaporated (2 mbar, 60 °C) for 3 h. Vacuum distillation (96 °C, 0.14 mbar) gave the product in 92% (2.20 g) yield.

Colorless oil, ¹H NMR (400 MHz, CDCl₃): δ 7.02 (d, *J =* 8.0 Hz, 1H), 6.79 (d, J=1.7 Hz, 1H), 6.75 (dd, *J* = 8.1*,* 1.9 Hz, 1H), 3.89 (s, 3H), 3.84 (s, 3H), 2.58 (t, *J* = 7.5 Hz, 2H), 1.65 (sext, *J* = 7.4 Hz, 2H), 0.96 (t, *J* = 7.4 Hz, 3H) ppm. ¹³C NMR (101 MHz, CDCl₃): δ 154.2 (C), 150.9 (C), 142.1 (C), 138.2 (C), 122.0 (CH), 120.6 (CH), 112.9 (CH), 56.0 (CH₃), 55.5 (CH₃), 38.1 (CH₂), 24.6 (CH₂), 13.9 (CH₃) ppm. HRMS (ESI) for C₁₂H₁₆O₄Na [M+Na]⁺ calcd. 247.0941, found 247.0935.

### 3-Methoxyphenyl methyl carbonate

General procedure 1 was applied using 3-methoxyphenol (880 µL, 8.0 mmol), NEt₃ (1.4 mL, 9.6 mmol), 4-dimethylaminopyridine (49 mg, 5 mol%) and methyl chloroformate (930 µL, 9.6 mmol). The mixture was stirred for 3 h. The product was obtained in 67% (970 mg) yield.

Yellow oil, ¹H NMR (400 MHz, CDCl₃): δ 7.28 (t, *J* = 8.2 Hz, 1H), 6.81-6.77 (m, 2H), 6.74 (t, *J* = 2.3 Hz, 1H), 3.90 (s, 3H), 3.80 (s, 3H) ppm. ¹³C NMR (101 MHz, CDCl₃): δ 160.7 (C), 154.3 (C), 152.2 (C), 130.0 (CH), 113.3 (CH), 112.1 (CH), 107.1 (CH), 55.6 (CH₃), 55.5 (CH₃) ppm. HRMS (ESI) for C₉H₁₁O₄ [M+H]⁺ calcd. 183.0652, found 183.0653.

### Methyl o-tolyl carbonate

General procedure 1 was applied using o-cresol (2.1 mL, 20 mmol), NEt₃ (3.3 mL, 24.0 mmol), 4-dimethylaminopyridine (122 mg, 5 mol%) and methyl chloroformate (2.3 mL, 24 mmol). The mixture was stirred for 6 h. The product was obtained in 95% (3.2 g) yield.

Red oil, ¹H NMR (400 MHz, CDCl₃): δ 7.24-7.10 (m, 4H), 3.91 (s, 3H), 2.24 (s, 3H) ppm. ¹³C NMR (101 MHz, CDCl₃): δ 154.2 (C), 149.8 (C), 131.4 (CH), 130.1 (C), 127.2 (CH), 126.4 (CH), 121.6 (CH), 55.6 (CH₃), 16.0 (CH₃) ppm. TLC-MS (ESI) for C₉H₁₀O₃Na [M+Na]⁺ calcd. 189.1, found 189.3.

### 2-(tert-Butyl)-4-methoxyphenyl methyl carbonate

General procedure 1 was applied using 4-hydroxy-3-*tert*-butylanisole (1.802 g, 10.0 mmol), NEt₃ (1.7 mL, 12.0 mmol) and methyl chloroformate (1.2 mL, 12.0 mmol). The mixture was stirred overnight. The product was purified by an automated flash chromatography system using a heptane/EtOAc gradient (from 100% heptane to 5% EtOAc in 40 min, 25 mL/min). The product was obtained in 47% (1.115 g) yield.

Colorless oil, ¹H NMR (400 MHz, CDCl₃): δ 7.01 (d, *J =* 8.8 Hz, 1H), 6.92 (d, *J =* 3.0 Hz, 1H), 6.74 (dd, *J =* 8.8, 3.0 Hz, 1H), 3.91 (s, 3H), 3.80 (s, 3H), 1.35 (s, 9H) ppm. ¹³C NMR (101 MHz, CDCl₃): δ 157.3 (C), 155.0 (C), 143.7 (C), 142.6 (C), 124.2 (CH), 113.9 (CH), 110.9 (CH), 55.7 (CH₃), 55.5 (CH₃), 34.8 (C), 30.2 (CH₃) ppm. HRMS (ESI) for C₁₃H₁₈O₄K [M+K]⁺ calcd. 277.0837, found 277.0828.

### Bis(3-methoxyphenyl) carbonate

General procedure 2 was applied using 3-methoxyphenol (1.3 mL, 12.0 mmol), NEt₃ (2.1 mL, 15.0 mmol) and triphosgene (593 mg, 2.0 mmol). The mixture was stirred for 5 h. The product was obtained in 83% (1.360 g) yield without further purification.

Yellow oil, ¹H NMR (400 MHz, CDCl₃): δ 7.32-7.28 (m, 2H), 6.89-6.81 (m, 6H), 3.81 (s, 6H) ppm. ¹³C NMR (101 MHz, CDCl₃): δ 160.7 (C), 152.1 (C), 152.0 (C), 130.1 (CH), 113.2 (CH), 112.4 (CH), 107.1 (CH), 55.7 (CH₃) ppm. HRMS (ESI) for C₁₅H₁₄O₅K [M+K]⁺ calcd. 313.0473, found 313.0473.

### Bis(2-(tert-butyl)-4-methoxyphenyl) carbonate

General procedure 2 was applied using 4-hydroxy-3-*tert*-butylanisole (1.802 g, 10.0 mmol), NEt₃ (1.6 mL, 11.7 mmol) and triphosgene (593 mg, 2.0 mmol). The mixture was stirred overnight. The product was purified by an automated flash chromatography system using a heptane/EtOAc gradient (from 100% heptane to 30% EtOAc in 35 min, 25 mL/min) and obtained in 57% (1.097 g) yield.

White solid, ¹H NMR (400 MHz, CDCl₃): δ 7.10 (d, *J* = 8.8 Hz, 2H), 6.96 (d, *J* = 2.9 Hz, 2H), 6.76 (d, *J =* 8.8, 2.9 Hz, 2H), 3.81 (s, 6H), 1.45 (s, 18H) ppm. ¹³C NMR (101 MHz, CDCl₃): δ 157.3 (C), 153.2 (C), 143.7 (C), 142.5 (C), 124.1 (CH), 113.9 (CH), 110.9 (CH), 55.6 (CH₃), 34.9 (C), 30.3 (CH₃) ppm. HRMS (ESI) for C₂₃H₃₀O₅K [M+K]⁺ calcd. 425.1725, found 425.1721.

### Bis(2-methoxy-4-propylphenyl) carbonate

A reactor was charged with 2-methoxy-4-propylphenol (83.1 g, 0.5 mol), pyridine (79.1 g, 1.0 mol) and dichloromethane (606 mL). The temperature was maintained at 25 °C *via* a thermostatic bath before phosgene (27.2 g, 0.28 mol) was added over a period of 15 minutes. The mixture was flushed with nitrogen for 45 minutes before it was washed twice with an aqueous HCl solution (10%, 400 mL) and three times with H₂O (400 mL). The solvent was removed and the product dried overnight at room temperature under vacuum. Bis(2-methoxy-4-propylphenyl) carbonate was obtained in 99% yield (88.95 g).

White solid, m.p.: 66-67 °C, ¹H NMR (400 MHz, CDCl₃): δ 7.13 (d, *J* = 8.1 Hz, 2H), 6.81 (d, *J =* 1.7 Hz, 2H), 6.77 (dd, *J* = 8.1, 1.8 Hz, 2H), 3.89 (s, 6H), 2.75-2.21 (m, 4H), 1.75-1.60 (m, 4H), 0.96 (t, *J =* 7.3 Hz, 6H) ppm. ¹³C NMR (101 MHz, CDCl₃): δ 151.8 (C), 150.9 (C), 142.1 (C), 138.4 (C), 122.0 (CH), 120.6 (CH), 113.1 (CH), 56.2 (CH₃), 38.1 (CH₂), 24.6 (CH₂), 13.9 (CH₃) ppm. HRMS for C₂₁H₂₆O₅Na [M+Na]⁺ calcd. 381.1672, found 381.1674.

### 1-Bromo-4-(dichloromethyl)benzene

A dry 100 mL round-bottomed flask equipped with a stir bar was charged with 4-bromobenzaldehyde (740.0 mg, 4.0 mmol), tetrabutylammonium iodide (1.478 g, 4.0 mmol), triphenylphosphine (1.259 g, 4.8 mmol) and anhydrous dichloroethane (8 mL) under inert atmospere. The reaction mixture was stirred at 80 °C overnight. After the mixture was cooled to room temperature, the solvent was removed by concentration under reduced pressure. The product was purified by an automated flash chromatography system using a heptane/EtOAc gradient (from 100% heptane to 30% EtOAc in 35 min, 25 mL/min) and obtained in 69% (622 mg) yield.

Yellow oil, ¹H NMR (400 MHz, CDCl₃): δ 7.55-7.51 (m, 2H), 7.46-7.41 (m, 2H), 6.66 (s, 1H) ppm. ¹³C NMR (101 MHz, CDCl₃): δ 139.5 (C), 132.1 (CH), 128.0 (CH), 124.2 (C), 71.0 (CH) ppm.

### 1-(Dichloromethyl)-4-methylbenzene

A dry 100 mL round-bottomed flask equipped with a stir bar was charged with 4-methylbenzaldehyde (476 µL, 4.0 mmol), tetrabutylammonium iodide (1.478 g, 4.0 mmol), triphenylphosphine (1.259 g, 4.8 mmol) and anhydrous dichloroethane (8 mL) under inert atmosphere. The reaction mixture was stirred at 80 °C overnight. After the mixture was cooled to room temperature, the solvent was removed by concentration under reduced pressure. The product was purified by an automated flash chromatography system using a heptane/EtOAc gradient (from 100% heptane to 15% EtOAc in 25 min, 25 mL/min) and obtained in 83% (580 mg) yield.

White solid, ¹H NMR (400 MHz, CDCl₃): δ 7.47 (d, *J* = 8.2 Hz, 2H), 7.22 (d, *J* = 7.9 Hz, 2H), 6.70 (s, 1H), 2.39 (s, 3H) ppm.¹³C NMR (101 MHz, CDCl₃): δ 140.2 (C), 137.8 (C), 129.5 (CH), 126.1 (CH), 72.0 (CH), 21.4 (CH₃) ppm.

### General considerations and methods

Nuclear magnetic resonance (NMR) spectra were recorded on a Bruker Avance III 400 (101 MHz for ¹³C) Fourier Transform NMR spectrometer at 300 K (unless stated otherwise) using the non or partly deuterated solvent as internal standard (¹H: *δ* = 7.26 ppm, ¹³C: *δ* = 77.16 ppm for CDCl₃). Chemical shifts (*δ*) are given in ppm and coupling constants (*J*) are reported in Hertz (Hz). Multiplicities are described as s (singlet), d (doublet), t (triplet), q (quartet), br s (broad singlet) and m (multiplet) or combinations thereof.

High resolution mass spectrometry (HRMS) samples were prepared by dissolving 0.1-5 mg of the compound in DMSO or CH₃CN/H₂O and further dilution to a concentration of 10⁻⁵-10⁻⁶ M. Formic acid (0.1%) was added prior to injection. 10 µL of each sample was injected using the CapLC system (Waters, Manchester, UK) and electrosprayed using a standard electrospray source. Samples were injected with an interval of 3 minutes. Positive ion mode accurate mass spectra were acquired using a Q-TOF II instrument (Waters, Manchester, UK). The MS was calibrated prior to use with a 0.1% H₃PO₄ solution. The spectra were lock mass corrected using the known mass of the nearest H₃PO₄ cluster or a known background ion. Analytes were detected as protonated or as a sodium adduct. All measured masses are within a difference of 5 ppm compared to the calculated mass unless specified otherwise.

Nano-electrospray mass analysis samples were prepared by dissolving 4 mg of the obtained solid in 1 mL of DMSO. This mixture was diluted by taking 10 µL and dissolving it in 990 µL DMSO and taking 100 µL from this solution and adding 900 µL of DMSO. The measurement was done by placing 3 µL of the obtained sample in a in a gold-coated borosilicate needle (in-house made).The sample was then sprayed from this needle using a nano-electrospray source (Waters). Positive ion mode accurate mass spectra were acquired using a Q-TOF II instrument (Waters, Manchester, UK).

Flash chromatography was performed either manually on SiO₂ (particle size 40-63 µm, pore diameter 60 Å) using the indicated eluent and visualized by UV detection (254 nm) or on an automated chromatography system (Biotage^{®} One Isolera Automatic Flash) with on-line UV detection using Grace^{®} Silica flash Cartridges.

Thin layer chromatography (TLC) was performed using TLC plates from Merck (SiO₂, Kieselgel 60 F254 neutral, on aluminum with fluorescence indicator) and compounds were visualized by UV detection (254 nm) unless mentioned otherwise.

Melting points were recorded on a Büchi M-565 melting point apparatus and are uncorrected.

Size exclusion chromatography was performed using a PSS SECcurity System; polycarbonate calibration (according to 2301-0257502-09D method of company Currenta GmbH & Co. OHG, Leverkusen), dichloromethane as eluent, column 1 (PL-PC5) with a concentration of 2 g/L, flow rate 1.0 mL/min, at a temperature of 30 °C using UV and/or RI detection.

### Reaction optimization

### A) Preliminary screening of the reaction conditions

### Synthetic procedure:

An oven-dried pressure vial of 10 mL equipped with a stir bar was charged with the indicated Lewis acid under inert atmosphere and the vial was cooled to 0 °C. Subsequently, 2-methoxyphenyl methyl carbonate (182 mg, 1.0 mmol) neat or dissolved in DCM (1 mL, dry) was added, followed by dropwise addition of benzal chloride (65 µL, 0.5 mmol) at this temperature. The resulting mixture was then stirred for 17 h at 30 °C, before it was quenched by the addition of water (10 mL). After extraction with EtOAc (20 mL), the organic phase was dried over anhydrous MgSO₄, filtered and evaporated to dryness *in vacuo.* The crude reaction mixture was purified by an automated flash chromatography system using a heptane/EtOAc gradient (from 100% heptane to 40% EtOAc in 30 min, 25 mL/min) to determine the yield of the desired product dimethyl (phenylmethylene)bis(6-methoxy-3,1-phenylene) biscarbonate.

**Table 1.**

| Example | Type | Lewis acid (equiv) | Solvent | Time (h) | Yield(%) |
|---|---|---|---|---|---|
| 1 | Comparative | / | DCM | 17 | 0 |
| 2 | Comparative | FeCl₃.6H₂O (1.0) | DCM | 17 | 0 |
| 3 | Reference | TiCl₄ (1.0) | DCM | 17 | 85 |
| 4 | Reference | TiCl₄ (1.0) | neat | 1.5 | 55 |
| 5 | Reference | TiCl₄ (0.2) | DCM | 48 | 13 |

Conclusion: The reaction of 2-methoxyphenyl methyl carbonate and benzal chloride to obtain dimethyl (phenylmethylene)bis(6-methoxy-3,1-phenylene) biscarbonate was studied as a model reaction. As expected, the biscarbonate was not formed in the absence of a Lewis acid (example 1). On the other hand, TiCl₄ was identified as a suitable Lewis acid to obtain the desired product in high isolated yield (example 3). A halogenated solvent turned out to be important for the reaction as in the absence of solvent the mixture solidified after 1.5 h and no further reaction occurred (example 4). Lowering the Lewis acid loading was not beneficial for this transformation as incomplete conversion was observed even after 48 hours (example 5).

### B) Screening of Lewis acids

### General procedure 3:

An oven-dried pressure vial of 10 mL equipped with a stir bar was charged with the indicated Lewis acid (0.1 or 1.0 equiv) under inert atmosphere and the vial was cooled to 0 °C. Subsequently, 2-methoxyphenyl methyl carbonate (182 mg, 1.0 mmol) dissolved in DCM (1 mL, dry) was added, followed by dropwise addition of benzal chloride (65 µL, 0.5 mmol) at this temperature. The resulting mixture was then stirred for 17 h at 30 °C, before it was quenched by the addition of water (10 mL). After extraction with EtOAc (20 mL), the organic phase was dried over anhydrous MgSO₄, filtered and evaporated to dryness *in vacuo.*

Analysis: A known amount of ethylene carbonate was added as internal standard and everything was dissolved in CDCl₃. A ¹H NMR spectrum was recorded and signals were integrated versus the internal standard to determine the yield of the desired biscarbonate.

**Table 2.**

| Example | Type | Lewis acid | Loading (equiv) | Yield (%) |
|---|---|---|---|---|
| 6 | Comparative | AlCl₃ | 0.1 | 0 |
| 7 | Reference | AlCl₃ | 1.0 | 11 |
| 8 | Comparative | Al(OTf)₃ | 0.1 | 0 |
| 9 | Comparative | Al(OTf)₃ | 1.0 | 0 |
| 10 | Comparative | Al(OTf)₃ | 2.0 | 0 |
| 11 | Reference | ZnCl₂ | 0.1 | 35 |
| 12 | Reference | ZnCl₂ | 1.0 | 83 |
| 13 | Reference | ZnBr₂ | 0.1 | 27 |
| 14 | Reference | ZnBr₂ | 1.0 | 46 |
| 15 | Comparative | Zn(OTf)₂ | 0.1 | 0 |
| 16 | Reference | Zn(OTf)₂ | 1.0 | 8 |
| 17 | Reference | FeBr₃ | 0.1 | 86 |
| 18 | Reference | FeBr₃ | 1.0 | 33 |
| 19 | Reference | FeCl₃ | 0.1 | 82 |
| 20 | Reference | FeCl₃ | 1.0 | 37 |
| 21 | Reference | Fe(OAc)₂ | 0.1 | 66 |
| 22 | Comparative | Fe(OAc)₂ | 1.0 | 0 |
| 23 | Comparative | Cu(OAc)₂ | 0.1 | 0 |
| 24 | Comparative | Cu(OAc)₂ | 1.0 | 0 |
| 25 | Comparative | CuCl₂ | 0.1 | 0 |
| 26 | Comparative | CuCl₂ | 1.0 | 0 |
| 27 | Reference | Cu(OTf)₂ | 0.1 | 3 |
| 28 | Reference | Cu(OTf)₂ | 2.0 | 5 |
| 29 | Comparative | Sc(OTf)₃ | 0.1 | 0 |
| 30 | Reference | Sc(OTf)₃ | 1.0 | 48 |
| 31 | Comparative | La(OTf)₃ | 0.1 | 0 |
| 32 | Comparative | La(OTf)₃ | 1.0 | 0 |
| 33 | Comparative | Yb(OTf)₃ | 0.1 | 0 |
| 34 | Comparative | Yb(OTf)₃ | 1.0 | 0 |
| 35 | Reference | BiCl₃ | 0.1 | 39 |
| 36 | Reference | BiCl₃ | 1.0 | 87 |
| 37 | Reference | Bi(OTf)₃ | 0.1 | 59 |
| 38 | Reference | Bi(OTf)₃ | 1.0 | 94 |
| 39 | Reference | TeCl₄ | 0.1 | 36 |
| 40 | Reference | TeCl₄ | 1.0 | 55 |
| 41 | Comparative | NbCl₅ | 0.1 | 0 |
| 42 | Reference | NbCl₅ | 1.0 | 30 |
| 43 | Reference | SnCl₄ | 0.1 | 56 |
| 44 | Reference | SnCl₄ | 1.0 | 69 |
| 45 | Comparative | SeCl₄ | 0.1 | 0 |
| 46 | Comparative | SeCl₄ | 1.0 | 0 |
| 47 | Comparative | SeCl₄ | 2.0 | 0 |
| 48^{[a]} | Comparative | SeCl₄ | 2.0 | 0 |
| 49 | Reference | InCl₃ | 0.1 | 86 |
| 50 | Reference | InCl₃ | 1.0 | 72 |
| 51 | Reference | In(OTf)₃ | 0.1 | 44 |
| 52 | Reference | In(OTf)₃ | 1.0 | 57 |

| | | | | |
|---|---|---|---|---|
| [a] DCE as solvent and reaction temperature of 70 °C. | | | | |

Conclusion: The Lewis acid screening in **Fehler! Verweisquelle konnte nicht gefunden werden**. Table 2 revealed that the coupling between 2-methoxyphenyl methyl carbonate and benzal chloride could be achieved in the presence of a metal or transition metal Lewis acid catalyst (defined as a MxLy compound) in stoichiometric or substoichiometric amount (preferably in substoichiometric amount). M preferably is a metal or transition metal like Al, Zn, Cu, Sc, Fe, Ti, Bi, Te, Nb, Sn or In, more preferably Fe, In, Zn or Bi; L represents a suitable organic or inorganic ligand like Cl, Br, I, OTf or OAc. The Lewis acids were screened in stoichiometric and in substoichiometric amount as a possible coordination of several Lewis acids with the carbonate functional group was anticipated, which could inhibit catalysis. Moreover, depending on the solubility of the metal catalyst, a higher catalyst loading or different ligand was required to achieve conversion of 2-methoxyphenyl methyl carbonate. Lewis acids, such as InCl₃, FeCl₃ and FeBr₃, could be added in a substoichiometric amount and delivered a high yield (examples 17, 19 and 49) and were therefore preferred. FeBr₃ was selected as optimal catalyst for further optimization (example 17) based on price and practical reasons.

### C) Brϕnsted acid screening

### Synthetic procedure:

An oven-dried pressure vial of 10 mL equipped with a stir bar was charged with the indicated Brϕnsted acid (0.2 equiv) under inert atmosphere and the vial was cooled to 0 °C. Subsequently, 2-methoxyphenyl methyl carbonate (182 mg, 1.0 mmol) dissolved in DCM (1 mL, dry) was added, followed by dropwise addition of benzal chloride (65 µL, 0.5 mmol) at this temperature. The resulting mixture was then stirred for 17 h at 30 °C, before it was quenched by the addition of water (10 mL). After extraction with EtOAc (20 mL), the organic phase was dried over anhydrous MgSO₄, filtered and evaporated to dryness *in vacuo.* Analysis was done as described in general procedure 3.

**Table 3.**

| Example | Type | Brϕnsted acid | Yield (%) |
|---|---|---|---|
| 53 | Comparative | Trifluoromethane sulfonic acid | 0 |
| 54 | Comparative | Sulfuric acid | 0 |
| 55 | Comparative | Acetic acid | 0 |
| 56 | Comparative | HBr (33 wt% in CH₃COOH) | 0 |

| | | | |
|---|---|---|---|
| Conclusion: Besides Lewis acids, several Brønsted acids (H₂SO₄, TfOH, AcOH and HBr) have been evaluated, however they all proved unsuccessful for the synthesis of the desired biscarbonate ( Table **3**). | | | |

### D) Solvent screening

### Synthetic procedure:

An oven-dried pressure vial of 10 mL equipped with a stir bar was charged with FeBr₃ (0.1 equiv) under inert atmosphere. Subsequently, 2-methoxyphenyl methyl carbonate (182 mg, 1.0 mmol) dissolved in the indicated solvent (1 mL, dry) was added, followed by dropwise addition of benzal chloride (65 µL, 0.5 mmol). The resulting mixture was then stirred for 17 h at 30 °C, before it was quenched by the addition of water (10 mL). After extraction with EtOAc (20 mL), the organic phase was dried over anhydrous MgSO₄, filtered and evaporated to dryness *in vacuo.* Analysis was done as described in general procedure 3.

**Table 4.**

| Example | Type | Solvent | Yield (%) |
|---|---|---|---|
| 57 | Reference | Toluene | 50 |
| 58 | Comparative | Dimethyl carbonate | 0 |
| 59 | Comparative | Cyrene | 0 |
| 60 | Comparative | Cyclopentyl methyl ether | 0 |
| 61 | Comparative | n-Butyl acetate | 0 |
| 62 | Comparative | Tetrahydrofuran | 0 |
| 63 | Reference | Dichloromethane | 86 |
| 64 | Reference | Dichloroethane | 95 |
| 65 | Comparative | Gamma-valerolactone | 0 |
| 66 | Comparative | Acetonitrile | 0 |

| | | | |
|---|---|---|---|
| Conclusion: Ten different solvents were evaluated for the synthesis of the desired biscarbonate ( | | | |

**Table 4).** Besides halogenated solvents, such as dichloromethane and dichloroethane (examples 63 and 64), also toluene (example 57) delivered the biscarbonate. However, benzal chloride also reacted with toluene resulting in side product formation. Therefore, chlorinated solvents were optimal for this transformation.

### E) Reduction of the catalyst loading

### Synthetic procedure:

An oven-dried pressure vial of 10 mL equipped with a stir bar was charged with FeBr₃ (mol%) under inert atmosphere. Subsequently, 2-methoxyphenyl methyl carbonate (182 mg, 1.0 mmol) dissolved in DCM (1 mL, dry) was added, followed by dropwise addition of benzal chloride (65 µL, 0.5 mmol). The vial was flushed with argon and either sealed (i.e. closed vial) or equipped with a reflux condenser and CaCl₂ drying tube (i.e. open vial). The resulting mixture was then stirred for 17 h at the indicated temperature, before it was quenched by the addition of water (10 mL). After extraction with EtOAc (20 mL), the organic phase was dried over anhydrous MgSO₄, filtered and evaporated to dryness *in vacuo.* Analysis was done as described in general procedure 3.

**Table 5.**

| Example | Type | FeBr₃ (mol%) | Vial | Temp (°C) | Yield (%) |
|---|---|---|---|---|---|
| 67 | Reference | 100 | closed | 30 | 33 |
| 68 | Reference | 10 | closed | 30 | 86 |
| 69 | Reference | 5 | closed | 30 | 66 |
| 70 | Reference | 5 | closed | 40 | 97 |
| 71 | Reference | 2.5 | closed | 30 | 17 |
| 72 | Reference | 2.5 | closed | 40 | 94 |
| 73 | Reference | 2.5 | open | 30 | 94 |
| 74 | Comparative | / | closed | 30 | 0 |

| | | | | | |
|---|---|---|---|---|---|
| Conclusion: With a chlorinated solvent and FeBr₃ as Lewis acid, a further screening of the catalyst loading was performed. Pleasingly, the loading could be reduced from 10 (example 68) to 5 (example 69) and even 2.5 mol% (example 71). Increasing the temperature to 40 °C generally improved the yield of the desired biscarbonate (entries 69-70 and 71-72). Performing the reaction in an open setup had a beneficial influence on the yield of the reaction (examples 72 and 73) as presumably hydrochloric acid can escape from the reaction vial. As expected, the biscarbonate was not formed in the absence of a Lewis acid (example 74). | | | | | |

### F) Influence of base

### Synthetic procedure:

An oven-dried pressure vial of 10 mL equipped with a stir bar was charged with FeBr₃ (0.10 equiv) and pre-dried base (2.0 or 4.0 equiv) under inert atmosphere. Subsequently, 2-methoxyphenyl methyl carbonate (182 mg, 1.0 mmol) dissolved in DCM (2 mL, dry) was added, followed by dropwise addition of benzal chloride (65 µL, 0.5 mmol). The resulting mixture was then stirred for 17 h at 30 °C, before it was filtered over Celite using EtOAc (20 mL). Subsequently, water (10 mL) was added and after extraction with EtOAc (2 x 20 mL), the organic phase was dried over anhydrous MgSO₄, filtered and evaporated to dryness *in vacuo.* Analysis was done as described in general procedure 3.

**Table 6.**

| Example | Type | Base (equiv) | Final pH reaction mixture | Yield (%) |
|---|---|---|---|---|
| 75 | Reference | / | 1-2 | 93 |
| 76 | Comparative | NEt₃ (2.0) | 6-7 | 0 |
| 77 | Comparative | K₂CO₃ (2.0) | 6-7 | 0 |
| 78 | Reference | Na₂CO₃ (2.0) | 6-7 | 76 |
| 79 | Reference | Na₂CO₃ (4.0) | 6-7 | 45 |

| | | | | |
|---|---|---|---|---|
| Conclusion: It was examined whether bases were tolerated in the coupling of 2-methoxyphenyl methyl carbonate and benzal chloride to neutralize the liberated hydrochloric acid (Table 6). These insights might be helpful for the oligomerizations. Nitrogen bases such as triethylamine proved not compatible as coordination with the Lewis acid (Lewis acid/Lewis base interaction) presumably inhibited catalysis (example 76). Inorganic carbonate bases were subsequently evaluated and potassium carbonate was not successful (example 77), but sodium carbonate delivered the desired carbonate in 76% yield (example 78). Pleasingly, the final pH of the reaction mixture was neutral, however incomplete conversion was observed. Increasing the amount of base diminished the yield further and moreover benzaldehyde was observed as side product in the last two cases (example 79). This suggested the hydrolysis of benzal chloride although the base was flame-dried prior to use. | | | | |

### G) Purity screening

### Synthetic procedure:

An oven-dried pressure vial of 10 mL equipped with a stir bar was charged with FeBr₃ (0.05 equiv) under inert atmosphere. Subsequently, 2-methoxyphenyl methyl carbonate (182 mg, 1.0 mmol, purity as indicated in Table 7) dissolved in DCM (1 mL, dry) was added, followed by dropwise addition of benzal chloride (65 µL, 0.5 mmol). The resulting mixture was then stirred for 4 h at 40 °C, before it was quenched by the addition of water (10 mL). After extraction with EtOAc (20 mL), the organic phase was dried over anhydrous MgSO₄, filtered and evaporated to dryness *in vacuo.* Analysis was done as described in general procedure 3.

**Table 7.**

| Example | Type | Purity 2-methoxyphenyl methyl carbonate (%)^{[a]} | Yield (%) |
|---|---|---|---|
| 80 | Reference | 100 | 97 |
| 81 | Reference | 95 | 88 |
| 82 | Reference | 90 | 15 |
| 83 | Comparative | 85 | 0 |

| | | | |
|---|---|---|---|
| [a] Remaining percentage is 2-methoxyphenol (guaiacol). Conclusion: The purity of 2-methoxyphenyl methyl carbonate was important for this transformation as illustrated in Table 7. When its precursor 2-methoxyphenol (guaiacol) was still present, the desired transformation was hampered, presumably by complexation with the Lewis acid, thereby inhibiting catalysis. | | | |

### H) Reaction time evaluation

### Synthetic procedure:

An oven-dried pressure vial of 10 mL equipped with a stir bar was charged with FeBr₃ (0.025 equiv) under inert atmosphere. Subsequently, 2-methoxyphenyl methyl carbonate (182 mg, 1.0 mmol) dissolved in DCE (2 mL, dry) was added, followed by dropwise addition of benzal chloride (65 µL, 0.5 mmol). The vial was flushed with argon and equipped with a reflux condenser and CaCl₂ tube and the resulting mixture was then stirred for the indicated time at 30 °C, before it was quenched by the addition of water (10 mL). After extraction with EtOAc (20 mL), the organic phase was dried over anhydrous MgSO₄, filtered and evaporated to dryness *in vacuo.* Analysis was done as described in general procedure 3.

**Table 8.**

| Example | Type | Time (h) | Yield (%) |
|---|---|---|---|
| 84 | Reference | 0.25 | 25 |
| 85 | Reference | 0.5 | 41 |
| 86 | Reference | 1 | 55 |
| 87 | Reference | 2 | 78 |
| 88 | Reference | 3 | 88 |
| 89 | Reference | 4 | 96 |
| 90 | Reference | 17 | 95 |

| | | | |
|---|---|---|---|
| Conclusion: The reaction time was evaluated for the coupling between 2-methoxyphenyl methyl carbonate and benzal chloride (Table 8). After 4 h the reaction reached complete conversion (example 89). | | | |

### Evaluation of the reaction scope

### A) Substituted dichloro derivatives

### General procedure 4:

An oven-dried pressure vial of 10 mL equipped with a stir bar was charged with FeBr₃ (0.05 equiv) under inert atmosphere. Subsequently, the methyl carbonate (1.0 mmol) dissolved in dichloroethane (1 mL, dry) was added, followed by dropwise addition of the substituted dichloromethylbenzene dissolved in dichloroethane (1 mL, dry). The vial was sealed and the resulting mixture was stirred for the indicated time and temperature, before it was quenched by the addition of water (10 mL). After extraction with EtOAc (20 mL), the organic phase was dried over anhydrous MgSO₄, filtered and evaporated to dryness *in vacuo.*

### General procedure 5:

An oven-dried pressure vial of 10 mL equipped with a stir bar was charged with either TiCl₄ (2.0 equiv) or FeBr₃ (0.1 equiv) under inert atmosphere. Subsequently, 2-methoxyphenyl methyl carbonate (182 mg, 1.0 mmol) dissolved in DCM (2 mL, dry) was added and the mixture was cooled to 0 °C, before dropwise addition of the indicated dichloro derivative (0.5 mmol) at this temperature. The vial was capped and the resulting mixture was then stirred for 17 h at 30 °C, before it was quenched by the addition of water (10 mL). After extraction with EtOAc (20 mL), the organic phase was dried over anhydrous MgSO₄, filtered and evaporated to dryness *in vacuo.* Analysis was done as described in general procedure 3.

### REFERENCE EXAMPLE 91 - Biscarbonate formation from 1-(dichloromethyl)-4-methylbenzene

General procedure 4 was applied using 2-methoxyphenyl methyl carbonate (182 mg, 1.0 mmol) and 1-(dichloromethyl)-4-methylbenzene (88 mg, 0.5 mmol). The mixture was stirred for 4 h at 30 °C. The product was purified by an automated flash chromatography system using a heptane/EtOAc gradient (from 100% heptane to 60% EtOAc in 40 min, 25 mL/min). Dimethyl ((4-methylphenyl)methylene)bis(6-methoxy-3,1-phenylene)) biscarbonate was obtained in 70% (163 mg) yield.

White solid, ¹H NMR (400 MHz, CDCl₃): δ 7.10 (d, *J* = 7.9 Hz, 2H), 6.98 (d, *J* = 8.0 Hz, 2H), 6.95-6.85 (m, 6H), 5.39 (s, 1H), 3.87 (s, 6H), 3.83 (s, 6H), 2.32 (s, 3H) ppm. ¹³C NMR (101 MHz, CDCl₃): δ 153.9 (C), 149.8 (C), 140.5 (C), 140.1 (C), 136.8 (C), 136.2 (C), 129.3 (CH), 129.3 (CH), 127.8 (CH), 123.4 (CH), 112.5 (CH), 56.1 (CH₃), 55.5 (CH₃), 54.6 (CH), 21.1 (CH₃) ppm. HRMS (ESI) for C₂₆H₂₇O₈ [M+H]⁺ calcd. 467.1700, found 467.1704.

### REFERENCE EXAMPLE 92 - Biscarbonate formation from 1-bromo-4-(dichloro methyl)benzene

General procedure 4 was applied using 2-methoxyphenyl methyl carbonate (182 mg, 1.0 mmol) and 1-bromo-4-(dichloromethyl)benzene (120 mg, 0.5 mmol). The mixture was stirred for 17 h at 70 °C. The product was purified by an automated flash chromatography system using a heptane/EtOAc gradient (from 100% heptane to 60% EtOAc in 40 min, 25 mL/min). Dimethyl ((4-bromophenyl)methylene)bis(6-methoxy-3,1-phenylene) biscarbonate was obtained in 70% (185 mg) yield.

Orange solid, ¹H NMR (400 MHz, CDCl₃): δ 7.43-7.37 (m, 2H), 6.99-6.96 (m, 2H), 6.93-6.86 (m, 4H), 6.84 (s, 2H), 5.38 (s, 1H), 3.87 (s, 6H), 3.83 (s, 6H) ppm. ¹³C NMR (101 MHz, CDCl₃): δ 153.9 (C), 150.0 (C), 142.6 (C), 140.1 (C), 135.7 (C), 131.7 (CH), 131.2 (CH), 127.8 (CH), 123.4 (CH), 120.7 (C), 112.6 (CH), 56.2 (CH₃), 55.6 (CH₃), 54.4 (CH) ppm. HRMS (ESI) for C₂₅H₂₃O₈Na [M+Na]⁺ calcd. 531.0649, found 531.0649.

### COMPARATIVE EXAMPLE 93 - Biscarbonate formation with dichloromethane

General procedure 5 was applied using dichloromethane (32 µL, 0.5 mmol) and TiCl₄ (220 µL, 2.0 equiv). The desired biscarbonate was not formed.

### COMPARATIVE EXAMPLE 94 - Biscarbonate formation with 1,1-dichloroethane

General procedure 5 was applied using 1,1-dichloroethane (42 µL, 0.5 mmol) and FeBr₃ (15 mg, 0.1 equiv). The desired biscarbonate was not formed.

### COMPARATIVE EXAMPLE 95 - Biscarbonate formation with dichloromethyl methyl ether

General procedure 5 was applied using dichloromethyl methyl ether (45 µL, 0.5 mmol) and TiCl₄ (220 µL, 2.0 equiv). The desired biscarbonate was not formed.

### COMPARATIVE EXAMPLE 96 - Biscarbonate formation with 2,2-dichloropropane

General procedure 5 was applied using 2,2-dichloropropane (52 µL, 0.5 mmol) and TiCl₄ (220 µL, 2.0 equiv). The desired biscarbonate was not formed.

### COMPARATIVE EXAMPLE 97 - Biscarbonate formation with 1,1-dichlorodiphenyl methane

General procedure 5 was applied using 1,1-dichlorodiphenylmethane (96 µL, 0.5 mmol) and TiCl₄ (220 µL, 2.0 equiv). The desired biscarbonate was not formed.

Conclusion: Several substituted dichloro derivatives were evaluated as a coupling partner for 2-methoxyphenyl methyl carbonate. Pleasingly, both electron-donating and electron-withdrawing substituents were tolerated on dichloromethylbenzene and delivered the desired biscarbonates in good yield (reference examples 91 and 92). Notably, with 1-bromo-4-(dichloromethyl)benzene (reference example 92) a higher reaction temperature was required as this substrate is less electrophilic than benzal chloride. Other dichloro derivatives [dichloromethane (example 93), 1,1-dichloroethane (example 94), dichloromethyl methyl ether (example 95), 2,2-dichloropropane (example 96) and 1,1-dichlorodiphenylmethane (example 97)] did not deliver the desired biscarbonates.

### B) Unsymmetrical and symmetrical carbonates

### COMPARATIVE EXAMPLE 98 - Biscarbonate formation from methyl phenyl carbonate

General procedure 4 was applied using methyl phenyl carbonate (100 µL, 1.0 mmol). The desired dimethyl ((phenylmethylene)bis(4,1-phenylene)) biscarbonate was not formed.

### REFERENCE EXAMPLE 99 - Biscarbonate formation from 2-methoxyphenyl methyl carbonate

General procedure 4 was applied using 2-methoxyphenyl methyl carbonate (182 mg, 1.0 mmol). The product was purified by an automated flash chromatography system using a heptane/EtOAc gradient (from 100% heptane to 40% EtOAc in 30 min, 25 mL/min). Dimethyl (phenylmethylene)bis(6-methoxy-3,1-phenylene) biscarbonate was obtained in 93% (189 mg) yield.

Yellow solid, m.p.: 61-62 °C, ¹H NMR (400 MHz, CDCl₃): δ 7.30-7.25 (s, 2H), 7.22-7.19 (m, 1H), 7.09 (d, *J* = 7.2 Hz, 2H), 6.94-6.83 (m, 6H), 5.42 (s, 1H), 3.86 (s, 6H), 3.82 (s, 6H) ppm. ¹³C NMR (101 MHz, CDCl₃): δ 153.9 (C), 149.8 (C), 143.5 (C), 140.1 (C), 136.6 (C), 129.4 (CH), 128.6 (CH), 127.8 (CH), 126.7 (CH), 123.5 (CH), 112.5 (CH), 56.2 (CH₃), 55.6 (CH₃), 55.0 (CH) ppm. HRMS (ESI) for C₂₅H₂₄O₈Na [M+Na]⁺ calcd. 475.1363, found 475.1364.

### REFERENCE EXAMPLE 100 - Biscarbonate formation from 2-methoxy-4-propyl phenyl methyl carbonate

General procedure 4 was applied using 2-methoxy-4-propylphenyl methyl carbonate (224 mg, 1.0 mmol). The product was purified by an automated flash chromatography system using a heptane/EtOAc gradient (from 100% heptane to 40% EtOAc in 30 min, 25 mL/min). Dimethyl (phenylmethylene)bis(6-methoxy-4-propyl-3,1-phenylene) biscarbonate was obtained in 91% (244 mg) yield.

Off-white solid, m.p.: 179-180 °C, ¹H NMR (400 MHz, CDCl₃): δ 7.34-7.24 (m, 2H), 7.22-7.18 (m, 1H), 7.00-6.98 (m, 2H), 6.80 (s, 2H), 6.48 (s, 2H), 5.71 (s, 1H), 3.85 (s, 12H), 2.46-2.40 (m, 4H), 1.56-1.47 (m, 4H), 0.91 (t, *J* = 7.3 Hz, 6H) ppm. ¹³C NMR (101 MHz, CDCl₃): δ 153.9 (C), 149.4 (C), 143.4 (C), 139.7 (C), 137.8 (C), 134.0 (C), 129.6 (CH), 128.6 (CH), 126.5 (CH), 123.7 (CH), 113.9 (CH), 56.1 (CH₃), 55.5 (CH₃), 48.2 (CH), 35.0 (CH₂), 24.1 (CH₂), 14.4 (CH₃) ppm. HRMS (ESI) for C₃₁H₃₆O₈Na [M+Na]⁺ calcd. 559.2302, found 559.2314.

### REFERENCE EXAMPLE 101 - Biscarbonate formation from methyl o-tolyl carbonate

General procedure 4 was applied using methyl o-tolyl carbonate (166 mg, 1.0 mmol) and dichloroethane (2 mL, dry) as solvent. The reaction mixture was stirred for 17 h at 70 °C. The product was purified by an automated flash chromatography system using a heptane/EtOAc gradient (from 100% heptane to 40% EtOAc in 30 min, 25 mL/min). Dimethyl (phenylmethylene)bis(6-methyl-3,1-phenylene) biscarbonate was obtained in 29% (62 mg) yield.

Colorless oil, ¹H NMR (400 MHz, CDCl₃): δ 7.30-7.21 (m, 3H), 7.11-7.09 (m, 2H), 7.02-6.97 (m, 4H), 6.92-6.90 (m, 2H), 5.45 (br s, 1H), 3.89 (s, 6H), 2.17 (s, 6H) ppm. ¹³C NMR (101 MHz, CDCl₃): 154.2 (C), 148.3 (C), 143.6 (C), 141.7 (C), 132.3 (CH), 129.9 (C), 129.5 (CH), 128.5 (CH), 128.0 (CH), 126.6 (CH), 121.4 (CH), 55.8 (CH), 55.5 (CH₃), 16.2 (CH₃) ppm. HRMS (ESI) for C₂₅H₂₄O₆K [M+K]⁺ calcd. 459.1204, found 459.1207.

### REFERENCE EXAMPLE 102 - Biscarbonate formation from 2-tert-butyl-4-methoxyphenyl methyl carbonate

General procedure 4 was applied using 2-*tert*-butyl-4-methoxyphenyl methyl carbonate (238 mg, 1.0 mmol). The product was purified by an automated flash chromatography system using a heptane/EtOAc gradient (from 100% heptane to 30% EtOAc in 45 min, 25 mL/min). Dimethyl ((phenylmethylene)bis(6-(*tert*-butyl)-4-methoxy-3,1-phenylene)) biscarbonate was obtained in 80% (225 mg) yield.

White foam, ¹H NMR (400 MHz, CDCl₃): δ 7.26-7.22 (m, 2H), 7.17-7.13 (m, 1H), 7.09 (d, *J* = 7.3 Hz, 2H), 6.82 (s, 2H), 6.58 (s, 2H), 6.07 (s, 1H), 3.82 (s, 6H), 3.69 (s, 6H), 1.34 (s, 18H) ppm. ¹³C NMR (101 MHz, CDCl₃): δ 154.7 (C), 154.6 (C), 143.2 (C), 143.0 (C), 139.8 (C), 130.9 (C), 129.3 (CH), 128.3 (CH), 126.1 (CH), 125.6 (CH), 110.0 (CH), 56.3 (CH₃), 55.2 (CH₃), 42.5 (CH), 34.8 (C), 30.4 (CH₃) ppm. HRMS (ESI) for C₃₃H₄₀O₈K [M+K]⁺ calcd. 603.2355, found 603.2341.

### REFERENCE EXAMPLE 103 - Oligomerization with 3-methoxyphenyl methyl carbonate

General procedure 4 was applied using 3-methoxyphenyl methyl carbonate (220 µL, 2.2 mmol). A white sticky compound was obtained, where the formation of oligomers was proven *via* nano-mass electrospray analysis. The repeating unit (n) had an m/z value of 271.1, with analytes detected as sodium adduct from 475.1 (n = 0, biscarbonate) until 1556.6 (n = 4).

### REFERENCE EXAMPLE 104 - Oligomerization with 2,6-dimethoxyphenyl methyl carbonate

General procedure 4 was applied using 2,6-dimethoxyphenyl methyl carbonate (212 mg, 1.0 mmol) and TiCl₄ (55 µL, 1.0 mmol). After evaporation of the solvent, MeOH was added and a precipitate was formed. The precipitation was filtered off over a paper filter and dried *in vacuo.* The formation of oligomers was proven *via* nano-mass electrospray analysis. The repeating unit (n) had an m/z value of 300.1, with analytes detected as sodium adduct from 535.1 (n = 0, biscarbonate) until 1735.5 (n = 4). In addition, the sodium adducts from the ring-closed oligomer intermediates were also visible in the mass spectrum and the analytes were detected as sodium adduct (e.g. 1223.4 with n = 3).

### General procedure 6:

An oven-dried pressure vial of 10 mL equipped with a stir bar was charged with FeBr₃ (0.025 equiv) under inert atmosphere. Subsequently, the aryl carbonate (0.5 mmol) dissolved in dichloromethane or dichloroethane (2 mL, dry) was added, followed by dropwise addition of benzal chloride (70 µL, 0.55 mmol). The vial was flushed with argon and equipped with a reflux condenser and CaCl₂ tube. The resulting solution was stirred at 30 °C for 17 h, before it was quenched by the addition of water. After extraction with DCM (15 mL), the organic phase was washed with water (20 mL) and saturated aqueous NaCl solution (20 mL) and evaporated to dryness *in vacuo.* The oligomeric mixture was precipitated *via* MeOH addition. The precipitation was filtered off over a paper filter and dried *in vacuo.*

### COMPARATIVE EXAMPLE 105 - Oligomerization with diphenyl carbonate

General procedure 6 was applied using diphenyl carbonate (214 mg, 1.0 mmol), benzal chloride (90 µL, 0.9 mmol) and dichloromethane. The formation of oligomers could not be proven *via* nano-mass electrospray analysis.

### INVENTIVE EXAMPLE 106 - Oligomerization with guaiacol carbonate

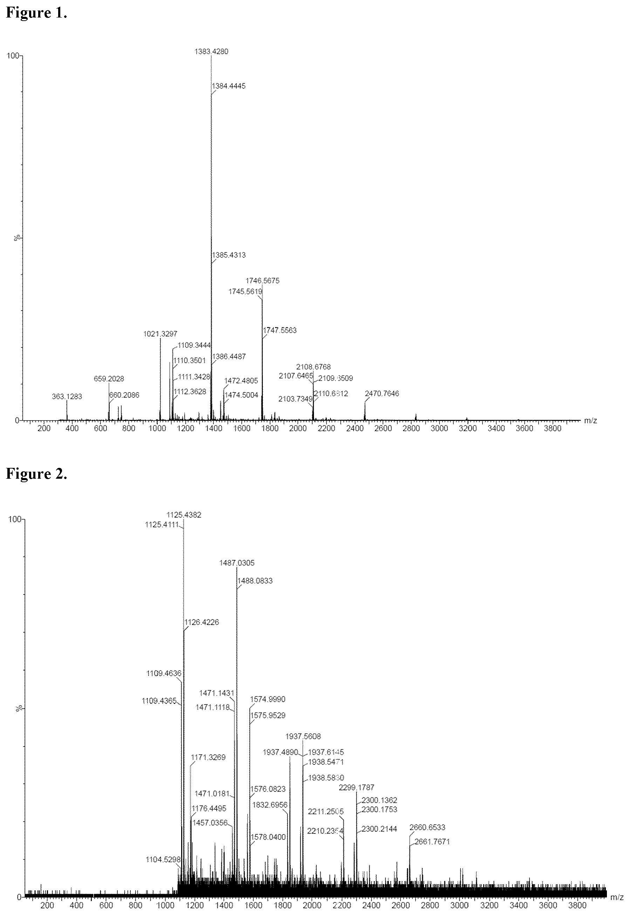

General procedure 6 was applied using guaiacol carbonate (137 mg, 0.5 mmol) and dichloromethane. A white solid was obtained, where the formation of oligomers was proven *via* nano-mass electrospray analysis (see Figure 1). The repeating unit (n) had a m/z value of 362.1, with analytes detected as sodium adduct from 659.2 (n = 0, biscarbonate) until 3556.1 (n = 8). In addition, the sodium adducts from the ring-closed oligomer intermediates were also visible in the mass spectrum and the analytes were detected as sodium adduct from 363.1 (n = 0) until 1471.1. GPC analysis confirmed the formation of oligomers with a number average molecular weight of Mₙ = 403.5 g/mol and a weight average molecular weight of M_{w} = 1210.4 g/mol.

### INVENTIVE EXAMPLE 107 - Oligomerization with bis(3-methoxyphenyl) carbonate

General procedure 6 was applied using bis(3-methoxyphenyl) carbonate (137 mg, 0.5 mmol). An off-white solid was obtained, where the formation of ring-closed oligomers was proven *via* nano-mass electrospray analysis (see Figure 2). The repeating unit (n) had a m/z value of 362.1, with analytes detected as sodium adduct from 1109.3 (n = 2) until 2159.6 (n = 5). The potassium adducts were also visible in the mass spectrum and the analytes were detected from 1125.4 (n = 2) until 2211.6 (n = 5). In addition, oligomers incorporating an additional benzal chloride moiety were observed with analytes detected from 1574.9 until 2660.6. GPC analysis confirmed the formation of oligomers with number average molecular weight of Mₙ = 1839 g/mol and weight average molecular weight of M_{w} = 38470 g/mol.

### INVENTIVE EXAMPLE 108 - Oligomerization with bis(2-(tert-butyl)-4-methoxy phenyl) carbonate

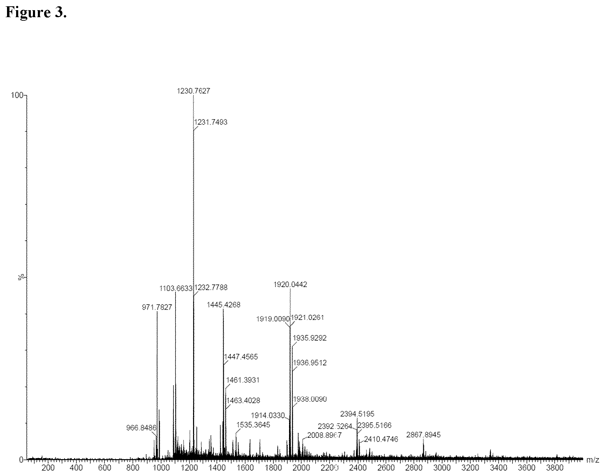

General procedure 6 was applied using bis(2-(*tert*-butyl)-4-methoxyphenyl) carbonate (193 mg, 0.5 mmol) and dichloroethane. An off-white solid was obtained, where the formation of ring-closed oligomers was proven *via* nano-mass electrospray analysis (see Figure 3). The repeating unit (n) had a m/z value of 474.1, with analytes detected as sodium adduct from 971.8 (n = 1) until 2867.9 (n = 5). The potassium adducts were also visible in the mass spectrum and the analytes detected from 987.7 (n = 2) until 2884.9 (n = 5). GPC analysis confirmed the formation of oligomers with number average molecular weight of Mₙ = 1315 g/mol and weight average molecular weight of M_{w} = 6557 g/mol.

Conclusion: Several unsymmetrical methyl carbonates were evaluated as a coupling partner for benzal chloride to obtain biscarbonates. A substituent is required at the aromatic moiety of the methyl carbonate as no coupling was observed with methyl phenyl carbonate (comparative example 98). Preferably this substituent entails a +M effect (e.g. a methoxy moiety; reference example 99), however a +I effect (e.g. a methyl moiety; reference example 101) is also sufficient to promote the coupling. Interestingly, it was found that the substituent overrules the *para*-directing effect of the carbonate group, so a *meta*-linkage with respect to the carbonate group is obtained. Furthermore, it was found that a combination of two substituents, which each have a +M effect and/or a +I effect, also deliver the envisioned biscarbonates (a *tert*-butyl and methoxy moiety in reference example 102, or a propyl and methoxy moiety in reference example 101). The methoxy moiety does not need to be in the *ortho*-position relative to the carbonate. In that case, the directing effect of the substituent caused other linkages between the aromatic moieties (reference example 102 and inventive example 103). With 3-methoxyphenyl methyl carbonate both *ortho-* and *para*-coupling was observed resulting in small oligomer formation (inventive example 103). Symmetrical aryl carbonates were subsequently evaluated and pleasingly oligomer formation was illustrated *via* nano-mass electrospray analysis and GPC analysis (inventive examples 106-108). The results were also in accordance with the unsymmetrical carbonates.

## Claims

1. A process for preparing a polycarbonate using electrophilic aromatic substitution, comprising a reaction of a compound with a structure of formula (I) 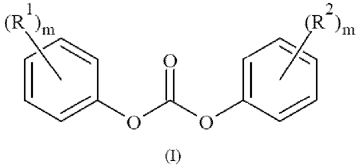 and a compound with a structure of formula (II) 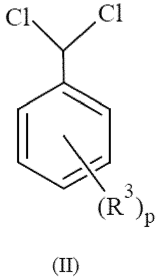 in the presence of a Lewis acid catalyst, preferably a metal- or transition metal-based Lewis acid catalyst,
yielding a polycarbonate comprising a repeating unit with a structure of formula (III) 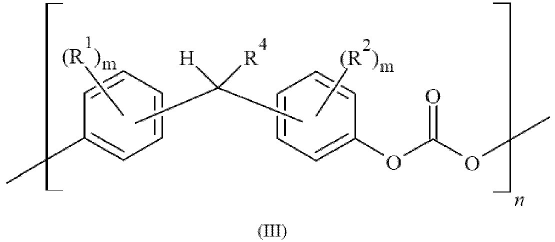 wherein the repeating unit with the structure of formula (III) comprises two aromatic rings, a carbonate group -OC(=O)O- and a linking group -CHR⁴-, wherein one of the two aromatic rings is substituted with the carbonate group, the two aromatic rings are linked *via* the linking group and the linking group in each repeating unit independently is either in *ortho, -meta-* or *para*-position with respect to the carbonate group, and wherein
- each m independently is 1 to 4, preferably 1 to 3,
- each R¹ and R² independently represents an R¹ substituent and an R² substituent, respectively, being capable of activating the aromatic ring which it substitutes by a mesomeric effect and/or an inductive effect, with the proviso that at least one R¹ substituent and additionally at least one R² substituent exhibits a +M effect or a +I effect,
- p is 0 to 5, preferably 0 to 3, more preferably 0 or 1,
- each R³ independently represents an R³ substituent independently representing an alkyl group, an alkoxy group, a halogen atom, a trifluoromethyl group, a carbonyl group with ketone or ester functionality, or a nitro group,
- R⁴ represents a phenyl group which is optionally substituted one to five times, preferably one to three times, more preferably one time, by an alkyl group, an alkoxy group, a halogen atom, a trifluoromethyl group, a carbonyl group with ketone or ester functionality, a nitro group, or a combination of these and
- n is the number of repeating units, preferably 6 to 60,
and wherein in case neither any of the m = 1 to 4 R¹ substituents nor any of the m = 1 to 4 R² substituents exhibits a +M effect, only one R¹ substituent or one R² substituent exhibits a +I effect.

2. The process according to claim 1, wherein each R¹ substituent and each R² substituent independently represents an alkyl group or an alkoxy group, preferably an alkyl or alkoxy group having 1 to 6 carbon atoms, more preferably methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

3. The process according to one of claims 1 to 2, wherein R⁴ represents a phenyl group which is not substituted or substituted one to five times, preferably one to three times, more preferably one time, by
- an alkyl group having 1 to 6 carbon atoms, preferably methyl, ethyl, *n*-propyl, isopropyl, *n*-butyl, *sec*-butyl, *tert-*butyl*, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl or 1-ethyl-2-methylpropyl,
- an alkoxy group having 1 to 6 carbon atoms, preferably methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy,
- F, Cl, Br or I, preferably Cl or Br,
- a trifluoromethyl group, a carbonyl group with ketone or ester functionality, or a nitro group
or a combination of these.

4. The process according to one of claims 1 to 3, wherein the compound with the structure of formula (I) comprises a structure of formula (Ia) 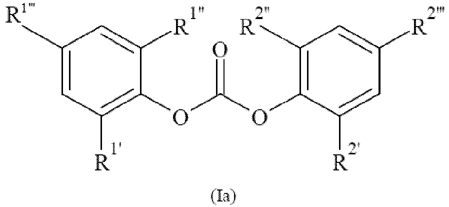 and the reaction of the compound with the structure of formula (Ia) and the compound with the structure of formula (II) yields a polycarbonate comprising a repeating unit with a structure of formula (IIIa) 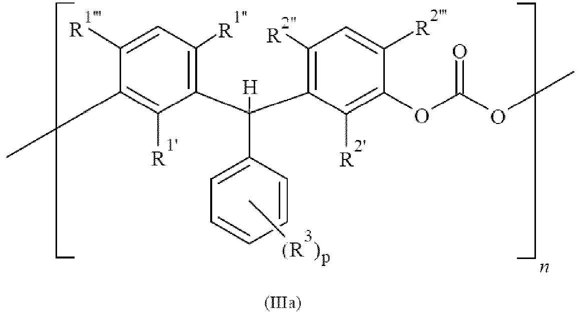 wherein
- R¹ , R^{1"} and R^{1‴} represent the R¹ substituents in formulas (I) and (III), respectively,
- R^{2'}, R^{2"} and R^{2‴} represent the R² substituents in formulas (I) and (III), respectively,
- p is 0 to 5, preferably 0 to 3, more preferably 0 or 1,
- each R³ independently represents an R³ substituent independently representing an alkyl group, an alkoxy group, a halogen atom, a trifluoromethyl group, a carbonyl group with ketone or ester functionality or a nitro group,
- n is the number of repeating units, preferably 6 to 60,
- R^{1'}, R^{1"}, R^{2'} and R^{2"} independently represent a hydrogen atom or a substitute which exhibits a +M effect or a +I effect, preferably an alkyl group or an alkoxy group, more preferably an alkyl or alkoxy group having 1 to 6 carbon atoms, most preferably methyl, ethyl, *n*-propyl, isopropyl, *n*-butyl, *sec-*butyl, *tert*-butyl, *n-*pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n-*hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy, and
- R^{1‴} and R^{2‴} independently represent a substitute which exhibits a +M effect or a +I effect, preferably an alkyl group or an alkoxy group, more preferably an alkyl or alkoxy group having 1 to 6 carbon atoms, most preferably methyl, ethyl, *n-*propyl, isopropyl, *n*-butyl, *sec*-butyl, *tert*-butyl, *n*-pentyl, 1-methylbutyl, 2-methylbutyl, 3-methylbutyl, neopentyl, 1-ethylpropyl, cyclohexyl, cyclopentyl, *n-*hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, n-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

5. The process according to one of claims 1 to 4, wherein either a halogenated solvent and/or an aromatic solvent or no solvent at all is used, wherein in case a solvent is used, it is preferably selected from dichloromethane, dichloroethane or toluene, more preferably dichloromethane or dichloroethane.

6. The process according to one of claims 1 to 5, wherein the Lewis acid catalyst, preferably the metal- or transition metal-based Lewis acid catalyst, comprises a metal or transition metal selected from Al, Zn, Fe, Cu, Sc, Ti, Bi, Te, Nb, Sn or In, preferably Fe, In, Zn or Bi.

7. The process according to claim 6, wherein the Lewis acid catalyst, preferably the metal- or transition metal-based Lewis acid catalyst, is selected from AlCl₃, ZnCl₂, ZnBr₂, Zn(OTf)₂, FeBr₃, FeCl₃, Fe(OAc)₂, Cu(OTf)₂, Sc(OTf)₃, TiCl₄, BiCl₃, Bi(OTf)₃, TeCl₄, NbCl₅, SnCl₄, InCl₃ or In(OTf)₃, preferably FeBr₃, FeCl₃ or InCl₃.

8. A process according to one of claims 1 to 7, wherein the Lewis acid catalyst is added in a stoichiometric or substoichiometric amount, preferably an amount of 0.025 to 2.2 equivalents, more preferably 0.025 to 0.2 equivalents, with respect to the compound of formula (I) or (Ia), respectively.

9. The process according to one of claims 1 to 8, wherein the compound of formula (II) is added in an amount of 0.5 to 1.1 equivalents, preferably 1.0 equivalent, with respect to the compound of formula (I) or (Ia), respectively.

10. The process according to one of claims 1 to 9, wherein the reaction is carried out at a reaction temperature of 30 to 70 °C, preferably 30 to 40 °C.

11. The process according to one of claims 1 to 10, wherein a Lewis base, preferably Na₂CO₃, is added to the reaction mixture, preferably in an amount of 2.0 to 4.0 equivalents, more preferably 2.0 equivalents, with respect to the compound of formula (I) or (Ia), respectively.

12. A polycarbonate comprising a repeating unit with a structure of formula (III) 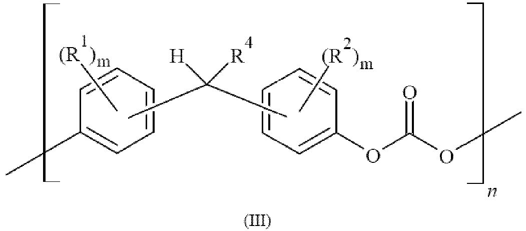 wherein
- the repeating unit with the structure of formula (III) comprises two aromatic rings, a carbonate group -OC(=O)O- and a linking group -CHR⁴-, wherein one of the two aromatic rings is substituted with the carbonate group, the two aromatic rings are linked *via* the linking group and the linking group in each repeating unit independently is either in *ortho-,meta* or *para*-position with respect to the carbonate group,
- each m independently is 1 to 4, preferably 1 to 3,
- each R¹ and R² independently represents an R¹ substituent and an R² substituent, respectively, being capable of activating the aromatic ring which it substitutes by a mesomeric effect and/or an inductive effect, with the proviso that at least one R¹ substituent and additionally at least one R² substituent exhibits a +M effect or a +I effect,
- R⁴ represents a phenyl group which is optionally substituted one to five times, preferably one to three times, more preferably one time, by an alkyl group, an alkoxy group, a halogen atom, a trifluoromethyl group, a carbonyl group with ketone or ester functionality, a nitro group, or a combination of these and
- n is the number of repeating units, preferably 6 to 60,
wherein in case neither any of the m = 1 to 4 R¹ substituents nor any of the m = 1 to 4 R² substituents exhibits a +M effect, only one R¹ substituent or one R² substituent exhibits a +I effect.

13. The polycarbonate according to claim 12, wherein each R¹ substituent and R² substituent independently represents an alkyl group or an alkoxy group, preferably an alkyl or alkoxy group having 1 to 6 carbon atoms, more preferably methyl, ethyl, *n-*propyl, isopropyl, *n*-butyl, *sec-*butyl, *tert-*butyl*, n*-pentyl, 1-methylbutyl, 2-methylbutyl, 3-methylbutyl, neopentyl, 1-ethylpropyl, cyclohexyl, cyclopentyl, *n-*hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, sec-butoxy, *tert-*butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

14. The polycarbonate according to one of claims 12 to 13, wherein R⁴ represents a phenyl group which is not substituted or substituted one to five times, preferably one to three times, more preferably one time, by
- an alkyl group having 1 to 6 carbon atoms, preferably methyl, ethyl, *n*-propyl, isopropyl, *n*-butyl, *sec*-butyl, *tert-*butyl, *n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl or 1-ethyl-2-methylpropyl,
- an alkoxy group having 1 to 6 carbon atoms, more preferably methoxy, ethoxy, *n-*propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy,
- F, Cl, Br or I, preferably Cl or Br,
- a trifluoromethyl group, a carbonyl group with ketone or ester functionality, or a nitro group
or a combination of these.

15. The polycarbonate according to one of claims 12 to 14, comprising a repeating unit with a structure of formula (IIIa) 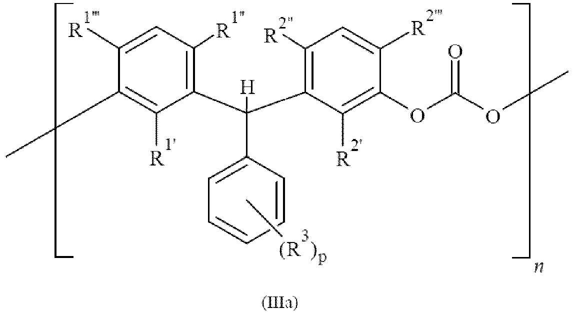 wherein
- R^{1'}, R^{1"} and R^{1‴} represent the R¹ substituents in formula (III),
- R^{2'}, R^{2"} and R^{2‴} represent the R² substituents in formula (III),
- each R³ independently represents an R³ substituent independently representing an alkyl group, an alkoxy group, a halogen atom, a trifluoromethyl group, a carbonyl group with ketone or ester functionality, or a nitro group,
- p is 0 to 5, preferably 0 to 3, more preferably 0 or 1,
- n is the number of repeating units, preferably 6 to 60,
- R^{1'}, R^{1"}, R^{2'} and R^{2"} independently represent a hydrogen atom or a substitute which exhibits a +M effect or a +I effect, preferably an alkyl group or an alkoxy group, more preferably an alkyl or alkoxy group having 1 to 6 carbon atoms, most preferably methyl, ethyl, *n*-propyl, isopropyl, *n*-butyl, *sec*-butyl, *tert-*butyl, *n-*pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n-*hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy, and
- R^{1‴} and R^{2‴} independently represent a substitute which exhibits a +M effect or a +I effect, preferably an alkyl group or an alkoxy group, more preferably an alkyl or alkoxy group having 1 to 6 carbon atoms, most preferably methyl, ethyl, *n-*propyl, isopropyl, *n*-butyl, *sec*-butyl, *tert-*butyl, *n*-pentyl, 1-methylbutyl, 2-methylbutyl, 3-methylbutyl, neopentyl, 1-ethylpropyl, cyclohexyl, cyclopentyl, *n-*hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n-*hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

## Patentansprüche

1. Verfahren zur Herstellung eines Polycarbonats mittels elektrophiler aromatischer Substitution, umfassend eine Umsetzung einer Verbindung mit einer Struktur der Formel (I) 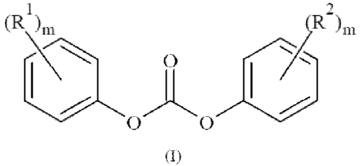 und einer Verbindung mit einer Struktur der Formel (II) 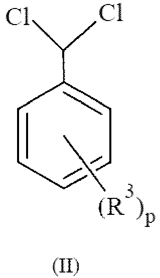 in Gegenwart eines Lewis-Säure-Katalysators, vorzugsweise eines Lewis-Säure-Katalysators auf Metall- oder Übergangsmetallbasis,
was ein Polycarbonat ergibt, das eine Wiederholungseinheit mit einer Struktur der Formel (III) umfasst 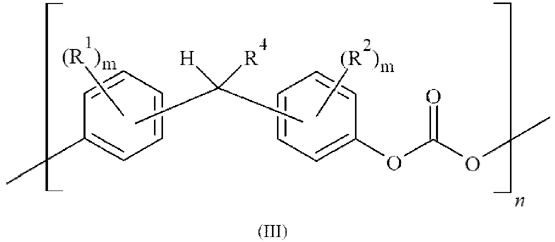 wobei die Wiederholungseinheit mit der Struktur der Formel (III) zwei aromatische Ringe, eine Carbonatgruppe -OC(=O)O- und eine Verknüpfungsgruppe -CHR⁴- umfasst, wobei einer der beiden aromatischen Ringe durch die Carbonatgruppe substituiert ist, die beiden aromatischen Ringe über die Verknüpfungsgruppe verknüpft sind und die Verknüpfungsgruppe in jeder Wiederholungseinheit unabhängig entweder in ortho-, meta- oder para-Position zur Carbonatgruppe steht,
und wobei
- m jeweils unabhängig 1 bis 4, vorzugsweise 1 bis 3, ist,
- R¹ und R² jeweils unabhängig für einen R¹-Substituenten bzw. einen R²-Substituenten stehen, der in der Lage ist, den aromatischen Ring, den er substituiert, durch einen mesomeren Effekt und/oder einen induktiven Effekt zu aktivieren, mit der Maßgabe, dass mindestens ein R¹-Substituent und zusätzlich mindestens ein R²-Substituent einen +M-Effekt oder einen +I-Effekt zeigen,
- p 0 bis 5, vorzugsweise 0 bis 3, weiter bevorzugt 0 oder 1, ist,
- R³ jeweils unabhängig für einen R³-Substituenten steht, der unabhängig für eine Alkylgruppe, eine Alkoxygruppe, ein Halogenatom, eine Trifluormethylgruppe, eine Carbonylgruppe mit Keton- oder Esterfunktionalität oder eine Nitrogruppe steht,
- R⁴ für eine Phenylgruppe steht, die gegebenenfalls ein- bis fünfmal, vorzugsweise ein- bis dreimal, weiter bevorzugt einmal, durch eine Alkylgruppe, eine Alkoxygruppe, ein Halogenatom, eine Trifluormethylgruppe, eine Carbonylgruppe mit Keton- oder Esterfunktionalität, eine Nitrogruppe oder eine Kombination davon substituiert ist, und
- n die Zahl der Wiederholungseinheiten, vorzugsweise 6 bis 60, ist,
und wobei in dem Fall, dass weder einer der m = 1 bis 4 R¹-Substituenten noch einer der m = 1 bis 4 R²-Substituenten einen +M-Effekt zeigt, nur ein R¹-Substituent oder ein R²-Substituent einen +I-Effekt zeigt.

2. Verfahren nach Anspruch 1, wobei jeder R¹-Substituent und jeder R²-Substituent unabhängig für eine Alkylgruppe oder eine Alkoxygruppe, vorzugsweise eine Alkyl- oder Alkoxygruppe mit 1 bis 6 Kohlenstoffatomen, weiter bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, steht.

3. Verfahren nach einem der Ansprüche 1 bis 2, wobei R⁴ für eine Phenylgruppe steht, die nicht substituiert oder ein- bis fünfmal, vorzugsweise ein- bis dreimal, weiter bevorzugt einmal, substituiert ist durch
- eine Alkylgruppe mit 1 bis 6 Kohlenstoffatomen, vorzugsweise Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl,
- eine Alkoxygruppe mit 1 bis 6 Kohlenstoffatomen, vorzugsweise Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy,
- F, Cl, Br oder I, vorzugsweise Cl oder Br,
- eine Trifluormethylgruppe, eine Carbonylgruppe mit Keton- oder Esterfunktionalität oder eine Nitrogruppe oder eine Kombination davon.

4. Verfahren nach einem der Ansprüche 1 bis 3, wobei die Verbindung mit der Struktur der Formel (I) eine Struktur der Formel (Ia) umfasst 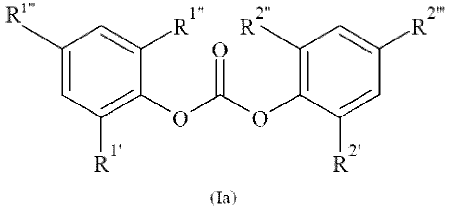 und die Umsetzung der Verbindung mit der Struktur der Formel (Ia) und der Verbindung mit der Struktur der Formel (II) ein Polycarbonat ergibt, das eine Wiederholungseinheit mit einer Struktur der Formel (IIIa) umfasst 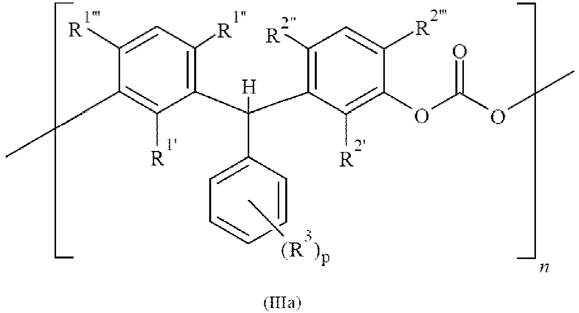 wobei
- R^{1'}, R^{1"} und R^{1‴} für die R¹-Substituenten in den Formeln (I) bzw. (III) stehen,
- R^{2′}, R^{2"} und R^{2‴} für die R²-Substituenten in den Formeln (I) bzw. (III) stehen,
- p 0 bis 5, vorzugsweise 0 bis 3, weiter bevorzugt 0 oder 1, ist,
- R³ jeweils unabhängig für einen R³-Substituenten steht, der unabhängig für eine Alkylgruppe, eine Alkoxygruppe, ein Halogenatom, eine Trifluormethylgruppe, eine Carbonylgruppe mit Keton- oder Esterfunktionalität oder eine Nitrogruppe steht,
- n die Zahl der Wiederholungseinheiten, vorzugsweise 6 bis 60, ist,
- R^{1'}, R^{1"}, R^{2'} und R^{2"} unabhängig voneinander für ein Wasserstoffatom oder einen Substituenten, der einen +M-Effekt oder einen +I-Effekt zeigt, vorzugsweise eine Alkylgruppe oder eine Alkoxygruppe, weiter bevorzugt eine Alkyl- oder Alkoxygruppe mit 1 bis 6 Kohlenstoffatomen, am meisten bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, stehen und
- R^{1‴} und R^{2‴} unabhängig voneinander für einen Substituenten stehen, der einen +M-Effekt oder einen +I-Effekt zeigt, vorzugsweise eine Alkyl- oder Alkoxygruppe, weiter bevorzugt eine Alkyl- oder Alkoxygruppe mit 1 bis 6 Kohlenstoffatomen, am meisten bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, stehen.

5. Verfahren nach einem der Ansprüche 1 bis 4, wobei entweder ein halogeniertes Lösungsmittel und/oder ein aromatisches Lösungsmittel oder gar kein Lösungsmittel verwendet wird, wobei in dem Fall, dass ein Lösungsmittel verwendet wird, dieses vorzugsweise aus Dichlormethan, Dichlorethan oder Toluol, weiter bevorzugt Dichlormethan oder Dichlorethan, ausgewählt ist.

6. Verfahren nach einem der Ansprüche 1 bis 5, wobei der Lewis-Säure-Katalysator, vorzugsweise der Lewis-Säure-Katalysator auf Metall- oder Übergangsmetallbasis, ein Metall oder Übergangsmetall umfasst, das aus Al, Zn, Fe, Cu, Sc, Ti, Bi, Te, Nb, Sn oder In, vorzugsweise Fe, In, Zn oder Bi, ausgewählt ist.

7. Verfahren nach Anspruch 6, wobei der Lewis-Säure-Katalysator, vorzugsweise der Lewis-Säure-Katalysator auf Metall- oder Übergangsmetallbasis, aus AlCl₃, ZnCl₂, ZnBr₂, Zn(OTf)₂, FeBr₃, FeCl₃, Fe(OAc)₂, Cu(OTf)₂, Sc(OTf)₃, TiCl₄, BiCl₃, Bi(OTf)₃, TeCl₄, NbCl₅, SnCl₄, InCl₃ oder In(OTf)₃, vorzugsweise FeBr₃, FeCl₃ oder InCl₃, ausgewählt ist.

8. Verfahren nach einem der Ansprüche 1 bis 7, wobei der Lewis-Säure-Katalysator in stöchiometrischer oder unterstöchiometrischer Menge, vorzugsweise in einer Menge von 0,025 bis 2,2 Äquivalenten, weiter bevorzugt 0,025 bis 0,2 Äquivalenten, bezogen auf die Verbindung der Formel (I) bzw. (Ia), zugegeben wird.

9. Verfahren nach einem der Ansprüche 1 bis 8, wobei die Verbindung der Formel (II) in einer Menge von 0,5 bis 1,1 Äquivalenten, vorzugsweise 1,0 Äquivalenten, bezogen auf die Verbindung der Formel (I) bzw. (Ia), zugegeben wird.

10. Verfahren nach einem der Ansprüche 1 bis 9, wobei die Umsetzung bei einer Reaktionstemperatur von 30 bis 70 °C, vorzugsweise 30 bis 40 °C, durchgeführt wird.

11. Verfahren nach einem der Ansprüche 1 bis 10, wobei eine Lewis-Base, vorzugsweise Na₂CO₃, der Reaktionsmischung zugegeben wird, vorzugsweise in einer Menge von 2,0 bis 4,0 Äquivalenten, weiter bevorzugt 2,0 Äquivalenten, bezogen auf die Verbindung der Formel (I) bzw. (Ia).

12. Polycarbonat, umfassend eine Wiederholungseinheit mit einer Struktur der Formel (III) 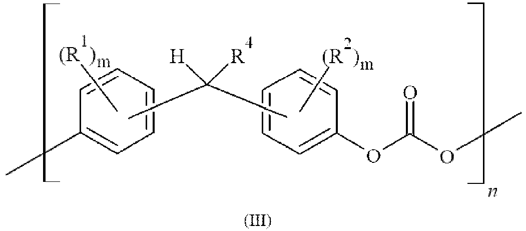 wobei
- die Wiederholungseinheit mit der Struktur der Formel (III) zwei aromatische Ringe, eine Carbonatgruppe - OC(=O)O- und eine Verknüpfungsgruppe -CHR⁴- umfasst, wobei einer der beiden aromatischen Ringe durch die Carbonatgruppe substituiert ist, die beiden aromatischen Ringe über die Verknüpfungsgruppe verknüpft sind und die Verknüpfungsgruppe in jeder Wiederholungseinheit unabhängig entweder in ortho-, meta- oder para-Position zur Carbonatgruppe steht,
- m jeweils unabhängig 1 bis 4, vorzugsweise 1 bis 3, ist,
- R¹ und R² jeweils unabhängig für einen R¹-Substituenten bzw. einen R²-Substituenten stehen, der in der Lage ist, den aromatischen Ring, den er substituiert, durch einen mesomeren Effekt und/oder einen induktiven Effekt zu aktivieren, mit der Maßgabe, dass mindestens ein R¹-Substituent und zusätzlich mindestens ein R²-Substituent einen +M-Effekt oder einen +I-Effekt zeigen,
- R⁴ für eine Phenylgruppe steht, die gegebenenfalls ein- bis fünfmal, vorzugsweise ein- bis dreimal, weiter bevorzugt einmal, durch eine Alkylgruppe, eine Alkoxygruppe, ein Halogenatom, eine Trifluormethylgruppe, eine Carbonylgruppe mit Keton- oder Esterfunktionalität, eine Nitrogruppe oder eine Kombination davon substituiert ist, und
- n die Zahl der Wiederholungseinheiten, vorzugsweise 6 bis 60, ist,
wobei in dem Fall, dass weder einer der m = 1 bis 4 R¹-Substituenten noch einer der m = 1 bis 4 R²-Substituenten einen +M-Effekt zeigt, nur ein R¹-Substituent oder ein R²-Substituent einen +I-Effekt zeigt.

13. Polycarbonat nach Anspruch 12, wobei jeder R¹-Substituent und R²-Substituent unabhängig für eine Alkylgruppe oder eine Alkoxygruppe, vorzugsweise eine Alkyl- oder Alkoxygruppe mit 1 bis 6 Kohlenstoffatomen, weiter bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, steht.

14. Polycarbonat nach einem der Ansprüche 12 bis 13, wobei R⁴ für eine Phenylgruppe steht, die nicht substituiert oder ein- bis fünfmal, vorzugsweise ein- bis dreimal, weiter bevorzugt einmal, substituiert ist durch
- eine Alkylgruppe mit 1 bis 6 Kohlenstoffatomen, vorzugsweise Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl,
- eine Alkoxygruppe mit 1 bis 6 Kohlenstoffatomen, weiter bevorzugt Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy,
- F, Cl, Br oder I, vorzugsweise Cl oder Br,
- eine Trifluormethylgruppe, eine Carbonylgruppe mit Keton- oder Esterfunktionalität oder eine Nitrogruppe oder eine Kombination davon.

15. Polycarbonat nach einem der Ansprüche 12 bis 14, umfassend eine Wiederholungseinheit mit einer Struktur der Formel (IIIa) 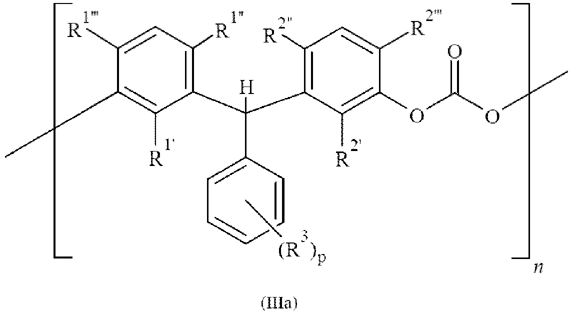 wobei
- R^{1'}, R^{1"} und R^{1‴} für die R¹-Substituenten in der Formel (III) stehen,
- R^{2′}, R^{2"} und R^{2‴} für die R²-Substituenten in der Formel (III) stehen,
- R³ jeweils unabhängig für einen R³-Substituenten steht, der unabhängig für eine Alkylgruppe, eine Alkoxygruppe, ein Halogenatom, eine Trifluormethylgruppe, eine Carbonylgruppe mit Keton- oder Esterfunktionalität oder eine Nitrogruppe steht,
- p 0 bis 5, vorzugsweise 0 bis 3, weiter bevorzugt 0 oder 1, ist,
- n die Zahl der Wiederholungseinheiten, vorzugsweise 6 bis 60, ist,
- R^{1'}, R^{1"}, R^{2'} und R^{2"} unabhängig voneinander für ein Wasserstoffatom oder einen Substituenten, der einen +M-Effekt oder einen +I-Effekt zeigt, vorzugsweise eine Alkylgruppe oder eine Alkoxygruppe, weiter bevorzugt eine Alkyl- oder Alkoxygruppe mit 1 bis 6 Kohlenstoffatomen, am meisten bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, stehen und
- R^{1‴} und R^{2‴} unabhängig voneinander für einen Substituenten stehen, der einen +M-Effekt oder einen +I-Effekt zeigt, vorzugsweise eine Alkyl- oder Alkoxygruppe, weiter bevorzugt eine Alkyl- oder Alkoxygruppe mit 1 bis 6 Kohlenstoffatomen, am meisten bevorzugt Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-Propoxy, Isopropoxy, n-Butoxy, sec-Butoxy, tert-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, stehen.

## Revendications

1. Procédé de préparation d'un polycarbonate utilisant une substitution aromatique électrophile, comprenant une réaction d'un composé ayant une structure de formule (I) 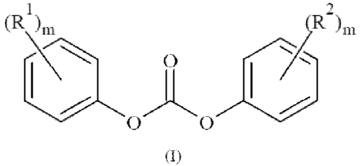 et d'un composé ayant une structure de formule (II) 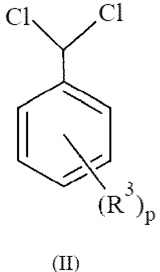
en présence d'un catalyseur de type acide de Lewis, de préférence un catalyseur de type acide de Lewis à base de métal ou de métal de transition,
produisant un polycarbonate comprenant un motif répétitif ayant une structure de formule (III) 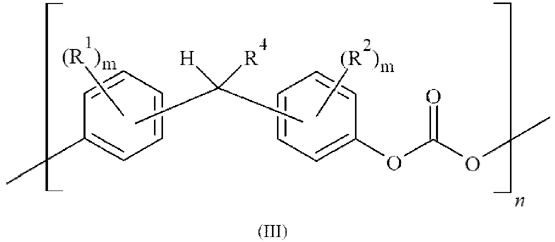
dans laquelle le motif répétitif ayant une structure de formule (III) comprend deux cycles aromatiques, un groupe carbonate -OC(=O)O- et un groupe de liaison -CHR⁴-, un des deux cycles aromatiques étant substitué par le groupe carbonate, les deux cycles aromatiques étant liés via le groupe de liaison et le groupe de liaison dans chaque motif répétitif est indépendamment soit en position ortho, méta ou para par rapport au groupe carbonate,
et dans laquelle,
- chaque m est indépendamment 1 à 4, de préférence 1 à 3,
- chaque R¹ et R² représente indépendamment respectivement un substituant R¹ et un substituant R², qui est capable d'activer le noyau aromatique qu'il substitue par un effet mésomère et/ou un effet inductif, sous réserve qu'au moins un substituant R¹ et en outre au moins un substituant R² présente un effet +M ou un effet +I,
- p est 0 à 5, de préférence 0 à 3, plus préférablement 0 ou 1,
- chaque R³ représente indépendamment un substituant R³ représentant indépendamment un groupe alkyle, un groupe alcoxy, un atome d'halogène, un groupe trifluorométhyle, un groupe carbonyle ayant une fonctionnalité cétone ou ester, ou un groupe nitro,
- R⁴ représente un groupe phényle éventuellement substitué une à cinq fois, de préférence une à trois fois, plus préférablement une fois, par un groupe alkyle, un groupe alcoxy, un atome d'halogène, un groupe trifluorométhyle, un groupe carbonyle ayant une fonctionnalité cétone ou ester, un groupe nitro, ou une combinaison correspondante et
- n est le nombre de motifs répétitifs, de préférence 6 à 60,
et dans laquelle, dans le cas où ni aucun des m = 1 à 4 substituants R¹ ni aucun des m = 1 à 4 substituants R² ne présentent un effet +M, un seul substituant R¹ ou un substituant R² présente un effet +I.

2. Procédé selon la revendication 1, dans lequel chaque substituant R¹ et chaque substituant R² représentent indépendamment un groupe alkyle ou un groupe alcoxy, de préférence un groupe alkyle ou alcoxy ayant 1 à 6 atomes de carbone, plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.

3. Procédé selon l'une des revendications 1 à 2, dans lequel R⁴ représente un groupe phényle qui n'est pas substitué ou substitué une à cinq fois, de préférence une à trois fois, plus préférablement une fois, par
- un groupe alkyle ayant 1 à 6 atomes de carbone, de préférence méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle ou 1-éthyl-2-méthylpropyle,
- un groupe alcoxy ayant 1 à 6 atomes de carbone, de préférence méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy,
- F, Cl, Br ou I, de préférence Cl ou Br,
- un groupe trifluorométhyle, un groupe carbonyle ayant une fonctionnalité cétone ou ester, ou un groupe nitro
ou une combinaison correspondante.

4. Procédé selon l'une des revendications 1 à 3, dans lequel le composé ayant la structure de formule (I) comprend une structure de formule (Ia) 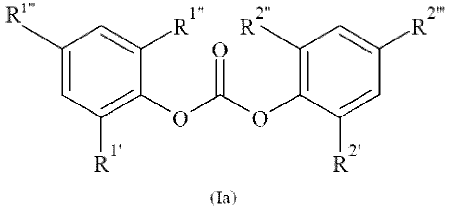 et la réaction du composé ayant la structure de formule (Ia) et du composé ayant la structure de formule (II) produit un polycarbonate comprenant un motif répétitif ayant une structure de formule (IIIa) 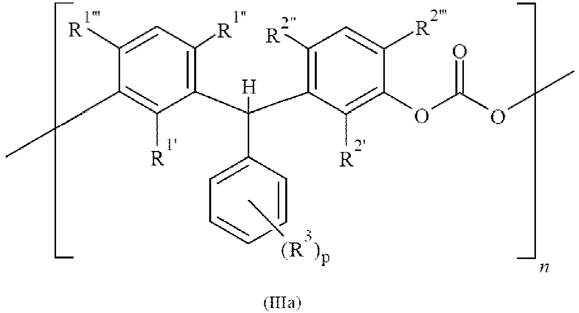 dans laquelle
- R^{1'}, R^{1"} et R^{1‴} représentent respectivement les substituants R¹ dans les formules (I) et (III),
- R^{2′}, R^{2"} et R^{2‴} représentent respectivement les substituants R² dans les formules (I) et (III),
- p est 0 à 5, de préférence 0 à 3, plus préférablement 0 ou 1,
- chaque R³ représente indépendamment un substituant R³ représentant indépendamment un groupe alkyle, un groupe alcoxy, un atome d'halogène, un groupe trifluorométhyle, un groupe carbonyle ayant une fonctionnalité cétone ou ester ou un groupe nitro,
- n est le nombre de motifs répétitifs, de préférence 6 à 60,
- R^{1'}, R^{1"}, R^{2'} et R^{2"} représentent indépendamment un atome d'hydrogène ou un substitut qui présente un effet +M ou un effet +I, de préférence un groupe alkyle ou un groupe alcoxy, plus préférablement un groupe alkyle ou alcoxy ayant 1 à 6 atomes de carbone, le plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy, et
- R^{1‴} et R^{2‴} représentent indépendamment un substituant qui présente un effet +M ou un effet +I, préférablement un groupe alkyle ou un groupe alcoxy, plus préférablement un groupe alkyle ou alcoxy ayant 1 à 6 atomes de carbone, le plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.

5. Procédé selon l'une des revendications 1 à 4, dans lequel soit un solvant halogéné et/ou un solvant aromatique sont utilisés, soit aucun solvant du tout n'est utilisé, dans lequel dans le cas où un solvant est utilisé, il est de préférence choisi parmi le dichlorométhane, un dichloroéthane ou le toluène, plus préférablement le dichlorométhane ou un dichloroéthane.

6. Procédé selon l'une des revendications 1 à 5, dans lequel le catalyseur de type acide de Lewis, de préférence le catalyseur de type acide de Lewis à base de métal ou de métal de transition comprend un métal ou un métal de transition choisi parmi Al, Zn, Fe, Cu, Sc, Ti, Bi, Te, Nb, Sn ou In, de préférence Fe, In, Zn ou Bi.

7. Procédé selon la revendication 6, dans lequel le catalyseur de type acide de Lewis, de préférence le catalyseur de type acide de Lewis à base de métal ou de métal de transition est choisi parmi AlCl₃, ZnCl₂, ZnBr₂, Zn(OTf)₂, FeBr₃, FeCl₃, Fe(OAc)₂, Cu(OTf)₂, Sc(OTf)₃, TiCl₄, BiCl₃, Bi(OTf)₃, TeCl₄, NbCl₅, SnCl₄, InCl₃ ou In(OTf)₃, de préférence FeBr₃, FeCl₃ ou InCl₃.

8. Procédé selon l'une des revendications 1 à 7, dans lequel le catalyseur de type acide de Lewis est ajouté en une quantité stœchiométrique ou sous-stœchiométrique, de préférence en une quantité de 0,025 à 2,2 équivalents, plus préférablement de 0,025 à 0,2 équivalents, par rapport au composé de formule (I) ou (Ia), respectivement.

9. Procédé selon l'une des revendications 1 à 8, dans lequel le composé de formule (II) est ajouté en une quantité de 0,5 à 1,1 équivalent, de préférence 1,0 équivalent, par rapport au composé de formule (I) ou (Ia), respectivement.

10. Procédé selon l'une des revendications 1 à 9, dans lequel la réaction est effectuée à une température de 30 à 70 °C, préférablement de 30 à 40 °C.

11. Procédé selon l'une des revendications 1 à 10, dans lequel une base de Lewis, de préférence Na₂CO₃, est ajoutée au mélange réactionnel, de préférence en une quantité de 2,0 à 4,0 équivalents, plus préférablement 2,0 équivalents, par rapport au composé de formule (I) ou (Ia), respectivement.

12. Polycarbonate comprenant un motif répétitif ayant une structure de formule (III) 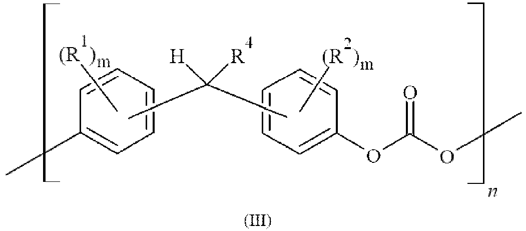 dans laquelle
- le motif répétitif ayant la structure de formule (III) comprend deux cycles aromatiques, un groupe carbonate -OC(=O)O- et un groupe de liaison -CHR⁴-, dans laquelle l'un des deux cycles aromatiques est substitué par le groupe carbonate, les deux cycles aromatiques sont reliés via le groupe de liaison et le groupe de liaison dans chaque motif répétitif est indépendamment soit en position ortho, soit méta, soit para par rapport au groupe carbonate,
- chaque m est indépendamment 1 à 4, de préférence 1 à 3,
- chaque R¹ et R² représente indépendamment respectivement un substituant R¹ et un substituant R², qui est capable d'activer le noyau aromatique qu'il substitue par un effet mésomère et/ou un effet inductif, sous réserve qu'au moins un substituant R¹ et en outre au moins un substituant R² présente un effet +M ou un effet +I,
- R⁴ représente un groupe phényle éventuellement substitué une à cinq fois, de préférence une à trois fois, plus préférablement une fois, par un groupe alkyle, un groupe alcoxy, un atome d'halogène, un groupe trifluorométhyle, un groupe carbonyle ayant une fonctionnalité cétone ou ester, un groupe nitro, ou une combinaison correspondante et
- n est le nombre de motifs répétitifs, de préférence 6 à 60,
dans lequel dans le cas où ni l'un quelconque parmi les m = 1 à 4 substituants R¹, ni aucun parmi les m = 1 à 4 substituants R² ne présentent un effet +M, seulement un substituant R¹ ou un substituant R² présente un effet +I.

13. Polycarbonate selon la revendication 12, dans lequel chaque substituant R¹ et chaque substituant R² représentent indépendamment un groupe alkyle ou un groupe alcoxy, de préférence un groupe alkyle ou alcoxy ayant 1 à 6 atomes de carbone, plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.

14. Polycarbonate selon l'une des revendications 12 à 13, dans lequel R⁴ représente un groupe phényle qui n'est pas substitué ou substitué une à cinq fois, de préférence une à trois fois, plus préférablement une fois, par
- un groupe alkyle ayant 1 à 6 atomes de carbone, de préférence méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle ou 1-éthyl-2-méthylpropyle,
- un groupe alcoxy ayant 1 à 6 atomes de carbone, plus préférablement méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy,
- F, Cl, Br ou I, de préférence Cl ou Br,
- un groupe trifluorométhyle, un groupe carbonyle ayant une fonctionnalité cétone ou ester, ou un groupe nitro
ou une combinaison correspondante.

15. Polycarbonate selon l'une des revendications 12 à 14, comprenant un motif répétitif ayant une structure de formule (IIIa) 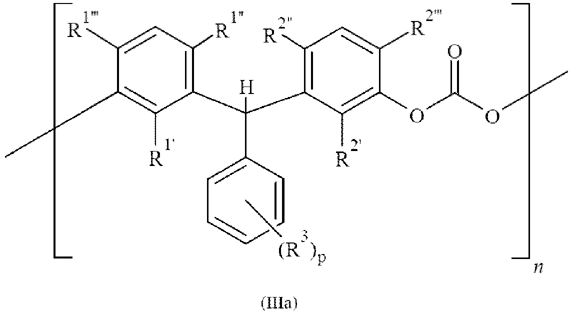 dans laquelle
- R^{1'}, R^{1"} et R^{1‴} représentent les substituants R¹ dans la formule (III),
- R^{2′}, R^{2"} et R^{2‴} représentent les substituants R² dans la formule (III),
- chaque R³ représente indépendamment un substituant R³ représentant indépendamment un groupe alkyle, un groupe alcoxy, un atome d'halogène, un groupe trifluorométhyle, un groupe carbonyle ayant une fonctionnalité cétone ou ester, ou un groupe nitro,
- p est 0 à 5, de préférence 0 à 3, plus préférablement 0 ou 1,
- n est le nombre de motifs répétitifs, de préférence 6 à 60,
- R^{1'}, R^{1"}, R^{2'} et R^{2"} représentent indépendamment un atome d'hydrogène ou un substitut qui présente un effet +M ou un effet +I, de préférence un groupe alkyle ou un groupe alcoxy, plus préférablement un groupe alkyle ou alcoxy ayant 1 à 6 atomes de carbone, le plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy, et
- R^{1‴} et R^{2‴} représentent indépendamment un substituant qui présente un effet +M ou un effet +I, préférablement un groupe alkyle ou un groupe alcoxy, plus préférablement un groupe alkyle ou alcoxy ayant 1 à 6 atomes de carbone, le plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.
